# EUROPEAN PATENT APPLICATION

(11) **EP 1 783 672 A1**
(43) Date of publication of application: **09.05.2007**
(21) Application number: 05110484.2
(22) Date of filing: 08.11.2005
(51) Int. Cl.: G06Q 10/00, H04L 12/26, G01D 4/00

(54) **Method for managing a group of servers taking into account electric power consumption**

(71) Applicant: Hewlett-Packard Development Company, L.P., Houston, TX 77070 (US)
(72) Inventor: Frietsch, Thomas, 71034, Boeblingen (DE); Trenz, Thomas, 71034, Boeblingen (DE)
(74) Representative: Lloyd, Richard Graham

(57) **Abstract**

A method of consolidating an existing arrangement of servers into a consolidated arrangement of servers, taking into account electric power consumption of the servers. An autodiscovery tool is run on the existing arrangement which discovers optimization-relevant data about the existing arrangement and obtains optimization-relevant data about the discovered servers, including their electric power consumption. A consolidated arrangement of servers is determined by optimizing the existing arrangement of servers according to the one or more optimization criteria, taking into account the electric power consumption of the servers.

## Description

### FIELD OF THE INVENTION

The present invention relates generally to consolidating information technological (IT) infrastructures, and for example, to methods, computer systems and computer program products for consolidating an IT infrastructure in consideration of its electric power consumption.

### BACKGROUND OF THE INVENTION

The rapid development in information technology over recent decades has revolutionized many business sectors. This means not only that a lot of high-technology companies that are concerned with the development of information technologies have been founded, but also that nowadays almost all companies and organizations, irrespective of the kind of business they are involved in, are highly dependent on their IT infrastructure. The term "IT infrastructure" refers to all computing facilities of a company or organization, such as servers, mainframe computers, terminals and interconnect devices such as hubs, switches and routers which interconnect the computing facilities to form an IT network. Typically, an IT infrastructure further features network management software which enables IT network components to be monitored and the malfunction of network components to be detected. Many companies and organizations spend a large amount of money on their IT infrastructures to ensure operation of the IT infrastructure with high reliability. Generally speaking, the more components an IT infrastructure includes, the more difficult it gets to monitor its functions and to ensure high reliability of the IT infrastructure.

During the last economic boom period many enterprises drastically increased the number of servers, software, staff and floor space in anticipation of continued robust economic growth. Given today's more challenging business environment and cost-cutting initiatives, many enterprises are exploring consolidating and optimize IT assets to improve efficiency, decrease complexity and reduce costs. That means, seen from an economic point of view, when adding new components to an existing IT infrastructure it is vital to bear in mind the maintenance costs related thereto which more and are increasingly a crucial consideration for IT-infrastructure administrators. Maintenance costs include for example the personnel costs incurred by the IT infrastructure and the floor space needed by the IT infrastructure. A large portion of floor space of the entire IT infrastructure of a company or organization is occupied by so-called "data centers", which are rooms or buildings in which all those devices of the IT infrastructure, such as servers, routers, hubs, switches and repeaters, are assembled which need not be located in the immediate vicinity of the users, such as monitors and end devices.

The following situations may lead, over the years, to data centers becoming suboptimal in terms of maintenance costs:

Typically, as a new major application (e.g. SAP) is to be installed, data center administrators tend to install the new application on its own new server due to numerous constraints which make it inadvisable to install certain application programs on the same server.

It may also happen that some application programs have become obsolete over the years, but have not been removed from the server.

There may also be servers in the data center with application programs assigned to personnel members who are no longer employed at the company. These servers, which nobody is responsible for, are also called "orphaned servers" and cause maintenance costs which could be saved.

As can be seen from the situations described above, the process of permanently adding new servers for new application programs to a data center, a process commonly referred to as "scaling out", is mostly not an economical solution in the long run, since in the course of scaling out, data centers undergo uncontrolled growth and incur additional maintenance costs. Therefore, after some time, data centers typically become inefficient and uneconomical because the application programs are distributed over more servers than actually needed. A proliferation of servers means that more administrative personnel are needed and therefore the maintenance costs increase. Furthermore, the floor space requirements also increase and, since the servers radiate heat, the air-conditioning has to work to bring down the temperature, which also increases the maintenance costs.

Consequently, after or instead of a period of uncontrolled growth of a data center, another strategy is preferably applied, namely consolidating the data center, which is also referred to as "scaling up". There are four key approaches to consolidation:
a) Centralization involves relocating existing servers to fewer sites. Centralization is often the initial activity a company takes toward controlling costs through consolidation.
b) Physical consolidation is the process of reducing the actual number of servers by replacing many small systems with fewer larger ones. Generally, this takes place within the same architecture.
c) Data integration enables the combination of data from different sources - across the same or disparate data types and architectures - into a central resource base.
d) Application integration involves the migration of an application and data to a new platform in order to collocate applications and data, including combining different application workload types within a single server.

In practice, a group of data-center administrators confronted with the task of physically consolidating a data center faces the problem of not exactly knowing which of the existing servers to replace with larger and more powerful mainframe servers as the group may not have the overview over all servers (and their technical features) on the market which could replace the existing servers. One must not forget that acquiring an overview over the existing IT infrastructure, i.e. procuring all the data about the existing IT infrastructure which is needed to perform a consolidation, may also be problematic if the IT infrastructure is complex and includes many network components. Therefore, to support IT staff in optimizing data centers, consulting companies have developed server consolidation software.

The company Asset Optimization Group (AOG), Richmond, Houston TX, USA, has specialized in server-capacity planning and offers the product "CapacityPlanner" which is a decision-support tool for consolidating data centers of servers. The "CapacityPlanner" helps to make decisions about which servers to consolidate, eliminate, or purchase for a consolidated data center. The principle of the "CapacityPlanner" relies on the fact that it has performance records (storage, CPU power, etc.) of different data servers stored inside a data warehouse, to which it resorts when consolidating new data centers. Therefore, "CapacityPlanner" is a software which assesses the current data center configuration and suggests a server-consolidation plan based on experiences of previous data- center consolidations. In analogy to a learning process, the "CapacityPlanner" permanently increases its data warehouse and thereby equally improves its consolidation capabilities. The "CapacityPlanner" can be regarded as an optimization tool which ameliorates an existing data center in terms of the number of data servers needed and thereby helps to reduce the maintenance costs. Of course, the "CapacityPlanner" also takes into account the costs of the servers for the consolidated data center and thereby helps to find a data center with fewer servers which is economically justifiable.

### SUMMARY OF THE INVENTION

The invention is directed to a method of consolidating an existing arrangement of servers into a consolidated arrangement of servers. Thereby, the electric power consumption of the servers is taken into account. An autodiscovery tool is run on the existing arrangement of servers which discovers the servers of the existing arrangement and obtains optimization-relevant data about the discovered servers, including their electric power consumption. The consolidated arrangement of servers is determined by optimizing the existing arrangement of servers according to one or more optimization criteria, taking into account the electric power consumption of the servers.

According to another aspect, a method is provided of consolidating an existing arrangement of servers into a consolidated arrangement of servers. Thereby, the electric power consumption of the servers, measured by a sensor within the servers, is taken into account. An autodiscovery tool is run on the existing arrangement of servers which discovers the servers of the existing arrangement and obtains optimization-relevant data about the discovered servers, including their measured electric power consumption. The consolidated arrangement of servers is determined by optimizing the existing arrangement of servers according to one or more optimization criteria, taking into account the measured electric power consumption of the servers.

According to yet another aspect, a computer system is provided for consolidating an existing arrangement of servers into a consolidated arrangement of servers. Thereby, the electric power consumption of the servers is taken into account. The computer system is programmed to run an autodiscovery tool on the existing arrangement of servers which discovers the servers of the existing arrangement and obtains optimization-relevant data about the discovered servers, including their electric power consumption. The consolidated arrangement of servers is determined by optimizing the existing arrangement of servers according to one or more optimization criteria, taking into account the electric power consumption of the servers.

According to another aspect, a computer program product is provided which is either in the form of a machine-readable medium with program code stored on it, or in the form of a propagated signal including a representation of program code. The program code is arranged to carry out a method, when executed on a computer system, of consolidating an existing arrangement of servers into a consolidated arrangement of servers. Thereby, the electric power consumption of the servers is taken into account. An autodiscovery tool is run on the existing arrangement of servers which discovers the servers of the existing arrangement and obtains optimization-relevant data about the discovered servers, including their electric power consumption. The consolidated arrangement of servers is determined by optimizing the existing arrangement of servers according to one or more optimization criteria, taking into account the electric power consumption of the servers.

Other features are inherent in the methods, systems and products disclosed or will become apparent to those skilled in the art from the following detailed description of embodiments and its accompanying drawings.

### BRIEF DESCRIPTION OF THE DRAWINGS

Embodiments of the invention will now be described, by way of example, and with reference to the accompanying drawings, in which:
Fig. 1 is a high-level architecture of an exemplary management station and an exemplary unconsolidated server arrangement, according to embodiments of the invention;
Figs. 2a and b illustrate two ways of extending a standardized Internet registration tree, according to embodiments of the invention;
Fig. 3 shows the calculation of an average electric power consumption, according to embodiments of the invention;
Fig. 4 illustrates another high-level architecture of an exemplary management station and an exemplary unconsolidated server arrangement, according to embodiments of the invention;
Fig. 5 is a high-level architecture diagram of an exemplary management station and an exemplary unconsolidated server arrangement, according to embodiments of the invention;
Figs. 6a and a' show an incomplete table of a relational data model containing server-related data about the unconsolidated server arrangement which has been discovered by an autodiscovery tool, according to embodiments of the invention;
Figs. 6b and b' display a table of a relational data model containing interconnect device-related data about the unconsolidated server arrangement which has been discovered by the autodiscovery tool;
Fig. 6c illustrates a topology table of the unconsolidated server arrangement;
Figs. 7 and 7' show an editor by means of which optimization-relevant data may be manually completed;
Fig. 8a illustrates a server database system, before an update process, containing server-related data from previous consolidations;
Fig. 8b shows data which is imported from a consolidation tool into the server database system;
Fig. 8c illustrates data which is manually entered via an editor into the server database system;
Fig. 9 shows an extract of the entries of the server database system in which the selection of the servers of the unconsolidated server arrangement and the servers which are available for use in the consolidated server arrangement are displayed;
Fig. 10 illustrates a linear optimization method for a continuous solution space;
Fig. 11 illustrates an integer linear optimization method;
Fig. 12 shows a classification of consolidation rules according to the optimization problems they solve;
Fig. 13 shows two servers that are going to be replaced by another server;
Fig. 14a shows the unconsolidated server arrangement after applying one consolidation rule;
Fig. 14b shows the consolidated server arrangement;
Fig. 15 exemplifies integration of electric power consumption considerations into AOG's CapacityPlanner;
Fig. 16 shows the division of server consolidation into an acquisition phase and a calculation phase;
Figs. 17a-c exemplify acquisition of optimization-relevant data according to embodiments of the invention;
Figs. 18a-d show consolidation calculations according to embodiments of the invention;
Fig. 19 is a diagrammatic representation of an embodiment of a network management station computer system.

The drawings and the description of the drawings are of embodiments of the invention and not of the invention itself.

### DESCRIPTION OF THE PREFERRED EMBODIMENTS

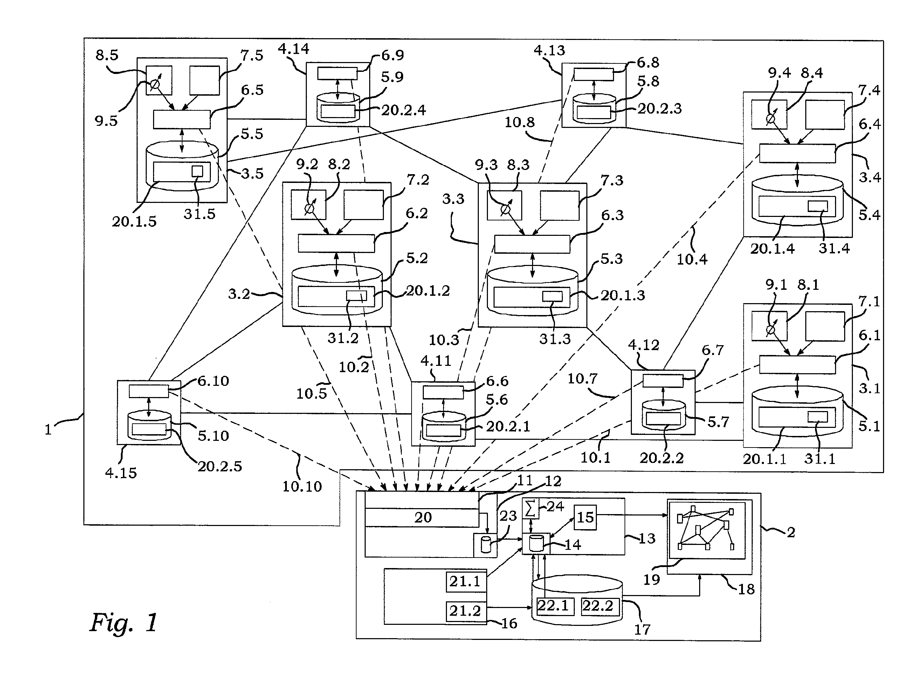

Fig. 1 is a high-level architecture diagram of an exemplary management system and an unconsolidated arrangement of servers. By means of Fig. 1, an embodiment of a consolidation method will be explained. However, before proceeding further with the description of Fig. 1, a few items of the embodiments will be discussed.

In some of the embodiments, an existing arrangement of servers is consolidated into a consolidated arrangement of servers, taking into account electric power consumption of the servers. An autodiscovery tool is run on the existing arrangement of servers which discovers the servers of the existing arrangement of servers and obtains optimization-relevant data about the discovered servers, including their electric power consumption. The consolidated arrangement of servers is determined by optimizing the existing arrangement of servers according to one or more optimization criteria, taking into account the electric power consumption of the servers.

In some of the embodiments, the determination of a consolidated arrangement of servers is started from an unconsolidated arrangement of servers.

In some of the embodiments, an arrangement of servers is, generally speaking, an IT network, which may be a computer network or a telecommunications network. A server arrangement includes network components, namely servers and interconnect devices, such as switches, bridges, hubs, and repeaters, which connect the servers among each other. In a business context, an arrangement of servers may relate to servers of a non-public network (intranet) of an enterprise or organization. Typically, these servers are located in one room or building, which is called a data center. More specifically, an arrangement of servers may relate to server clusters, computer farms or ranches. A server farm is a group of networked servers that are housed in one location. A server farm streamlines internal processes by distributing the workload between the individual components of the farm and expedites computing processes by harnessing the power of multiple servers. An arrangement of servers may also relate to a telecommunications network.

It should be mentioned that the term "arrangement" does not connote a "geometrical placement" but rather expresses the fact that the servers (and the interconnect devices) stand in relationship to each other via connections. Thus, a server arrangement, as used in this context, has a topology but it is insignificant where exactly the individual network components are located.

The term "consolidation", as used herein, refers to replacing a set of servers of the unconsolidated arrangement of servers with another set of servers (which is typically smaller), whereby the consolidated arrangement of servers is optimized according to one or more optimization criteria.

The term "optimization criteria" refers to attributes of the servers according to which an arrangement of servers is optimized, whereas "optimization-relevant data" includes the data belonging to the optimization criteria and further includes all data belonging to network components that is needed to calculate a consolidated server arrangement.

In some of the embodiments, optimization-relevant data includes data related to attributes, such as floor space of an server, CPU performance, price, currently free memory space, maintenance costs and electric power consumption. These attributes may also be optimization criteria if the optimization aims at minimizing or maximizing their value. In all consolidations discussed herein, the electric power consumption of the servers involved in the consolidation is considered.

In some of the embodiments, the "electric power consumption" is the attribute which is to be minimized (electric power consumption as an optimization criterion), whereas in other embodiments, the electric power consumption of the servers is taken into account when optimizing another parameter (as part of the optimization-relevant data, but not as optimization criterion). In these cases, the electric power consumption is considered to form part of boundary conditions.

An optimization problem usually includes an objective function (the function which minimizes or maximizes the one or more optimization criteria) and a set of boundary conditions which represent constraints that the optimal solution should fulfill.

The term "optimization-relevant data", as used herein, includes data relating to both the unconsolidated server arrangement and to the consolidated server arrangement. The term can be further divided into server-related optimization-relevant data, interconnect device-related optimization-relevant data and optimization-relevant data pertaining to both servers and interconnect devices, such as data representing connections between servers and interconnect devices.

The arrangement of servers is preferably, but not necessarily, a TCP/IP network in which the components run the TCP/IP protocol suite, have an IP address and can send IP packets to all other components.

As mentioned at the outset, consolidating a server arrangement, commonly referred to as server consolidation, is typically subdivided into the following categories (see for example: Hewlett Packard, "Successful server consolidation: it's all in the preparation", white paper, 2nd Edition, pp.5-8):
a) Centralization: collocating server and/or storage into fewer locations or one central location;
b) Physical consolidation: consolidating servers or storage systems with the same application types or platforms onto fewer or larger systems with the same application type or platform;
c) Data Integration: combining data with different formats onto a similar format or platform;
d) Application: consolidating servers or storage systems supporting different types of workloads onto fewer or larger systems;
e) Storages: consolidating storage onto fewer or larger storage systems independent of server type, operating system, or application.

According to this categorization, the present application focuses on physical server consolidation in that it teaches optimization methods that replace servers of an existing server arrangement with servers that are more favorable with regard to one or more optimization criterion, whereby the electric power consumption of the individual servers is taken into account. For the sake of simplicity, the type of applications running on the individual servers is not considered.

In some of the embodiments, server consolidation results in a reduced number of servers in the server arrangement. In other embodiments, it further reduces the data center footprint, or reduction in data-center space. Server consolidation may obviate the cost of building a new data center. It thereby drives up the ratio of computer power per square foot. The total cost of ownership (TCO) for the server arrangement is reduced.

To consolidate a given server arrangement, data pertaining to the unconsolidated server arrangement and data about servers that are eligible for the consolidated server arrangement has to be collected. Typically, the data pertaining to the unconsolidated server arrangement is automatically gathered by means of an autodiscovery tool which is less laborious than having the data collected by employees of the company or organization. The term "autodiscovery", as used herein, relates to the automated collecting of optimization-relevant data stored in the network components of the unconsolidated server arrangement.

In some of the embodiments, all optimization-relevant data about the network components is collected via an autodiscovery tool, whereas in other embodiments, only parts of the optimization-relevant data about the unconsolidated server arrangement or only identifying information of the network components are collected by the autodiscovery tool.

In some of the embodiments, autodiscovery tools gather optimization-relevant data about the network components via SNMP which stands for Simple Network Management Protocol and is a protocol from the TPC/IP protocol suite acting on the Application Layer. However, the autodiscovery function may also be performed by means of another network management protocol or without any protocol but by means of a different methodology.

In some of the embodiments, the consolidation is performed on a DMI (Desktop Management Interface)-based management architecture. DMI provides a standard framework for the management and control of desktop PC's, notebooks and servers. DMI encompasses definition of an information model, the so-called management information format (MIF). It specifies concrete management information for workstation computers and their components using this model. Furthermore, DMI puts emphasis on coordination and integration of several management agents (subagents) within a workstation. Finally, DMI creates communications infrastructure for remote and local access to management information. (Hegering, H.-G., Abeck, S., Neumair, B. "Integrated Management of Networked Systems: Concepts, Architectures, and Their Operational Application", p.233, Morgan Kaufmann Publishers, 1999).

In other embodiments, the consolidation is performed on a WMI (Windows Management Instrumentation)-based management architecture. WMI is a set of extensions to the Windows Driver Model. WMI provides an operating system interface through which instrumented components provide information and notification. WMI is Microsoft's implementation of the Web-Based Enterprise Management (WBEM) Standard from the Distributed Management Task Force (DMTF). WMI allows scripting languages like VBScript to manage Windows PCs and servers, both locally and remotely.

In yet other embodiments, an open-source implementation of the WBEM standard is used, which is called OpenPegasus. It is designed to be portable and highly modular. OpenPegasus runs on most versions of Unix, Linux, and AIX.

The autodiscovery tool collects those optimization-relevant data from all network components which are accessible. When using SNMP, this implies that only network components which have an IP address are queryable. Typically, some interconnect devices such as hubs and repeaters do not feature an IP address and are therefore inaccessible via SNMP. It should be mentioned that nowadays, switches are preferred to hubs for performance reasons. Furthermore, switches became budget-priced over the last years.

In the individual network components, the optimization-relevant data is stored in management information bases. The term "management information base" is closely related to SNMP in which an SNMP manager sends requests to an SNMP agent which, in turn, has access to a management information base in which optimization-relevant data is stored. The management information base in the context of SNMP has a standardized structure. It should be mentioned that the term "management information base", as used herein, is not only used in this SNMP-specific meaning, but also in a broader sense relating to other management architectures such as DMI or WMI. A management information base is any kind of memory associated with a network component in which optimization-relevant data pertaining to the network component is stored.

The data collected by the autodiscovery tool is deposited in a database which is typically organized as a relational database scheme, encompassing tables with attributes storing data pertaining to the individual network components. Furthermore, the autodiscovery database stores information about how the network components are interconnected. The tables storing this information are typically referred to as topology tables. An example of an autodiscovery tool is "LAN Mapshot", a product by Fluke Networks, Everett WA, USA.

Some of the optimization-relevant data is queryable via an autodiscovery tool and is automatically integrated into the relational data model, whereas other optimization-relevant data is imported from other sources or has to be entered manually.

In some of the embodiments, the current electric power consumption of the servers is measured by a sensor. A sensor for measuring electric power consumption is typically an electric power meter which is installed inside the power supply units of the servers. The electric power meter is connected via an internal bus via which it delivers its measured electric power consumption values. Basically, the electric power consumption of a server is composed of the electric power consumption of its constituent parts, such as hard-disk drive, DVD drive, memory, mainboard, graphics card, sound card, CPU, etc. and power consumption is not a constant value but undergoes variations. The electric power consumption of a CPU, for example, depends on its clock frequency and also on the kind of operation that is currently being performed. The measured electric power consumption values are updated on a regular basis in a management information base. When a consolidation is initiated, then the electric power consumption which is currently stored in the management information base of each server is used as input for calculating the consolidated server arrangement. However, if the values presently stored in the management information bases of the servers are not characteristic for some of the servers, then the calculation of the consolidated server arrangement may yield a solution which is not an improvement in reality in the sense of the optimization problem. If, for example, the total electric power consumption of a server arrangement is to be minimized and the electric power consumption of a server is for 90% of the time above 1,000W, but shortly before the consolidation is triggered, an electric power consumption of only 700W is measured, then the data used for consolidating the server arrangement is unrealistic and the calculated consolidated server arrangement may not be more profitable than the unconsolidated server arrangement.

In some of the embodiments, a server database system is provided by means of which optimization-relevant data about the servers of the first arrangement which is not obtainable via the autodiscovery tool can be manually entered. The data used for completing the optimization-relevant data about the servers stems from previous consolidations during which new data has been adopted into the server database. A database, in general, is a collection of data, which belongs together from the viewpoint of the user, e.g. a personnel database or an inventory database. There are hierarchical, relational, multidimensional and object-oriented databases. A database is usually administrated by a database management system (DBMS). A database system is a database in combination with a database management system. The term "database" as used herein may also relate to a data warehouse which is defined in many ways. A data warehouse is generally a subject-oriented, integrated, time-variant, nonvolatile collection of data in support of management's decision-making process. A data warehouse integrates data coming from different sources and is connected to tools which enable reports, statistic data and performance figures to be compiled quickly. It therefore constitutes a starting point for a variety of analytical tasks. A server database stores server-related data which may also be optimization-relevant data.

Furthermore, optimization-relevant data about servers which are available for use in the consolidated arrangement of servers but which are not used in the first arrangement of servers are provided via the server database system.

Besides the server database system, an editor is provided by means of which data which is not discovered by the autodiscovery tool may be manually entered. The data entered by the user includes, on the one side, server-related optimization-relevant data about the first arrangement of servers and, on the other side, optimization-relevant data about servers that are available for use in the second arrangement but which are not used in the first arrangement.

In some of the embodiments, both an editor and a server database system are provided which are both appliances for completing incomplete optimization-relevant data discovered by the autodiscovery tool. However, if all the optimization-relevant data needed for the consolidation is provided by the editor or the server database system, by itself, then the system is conceivable without the other appliance (i.e. either the editor or the database system).

In other embodiments, the current electric power consumption is also measured by electric power meters located in the power-supply units of each server but instead of using the most recently measured electric power consumption value, the electric power consumption of each server is measured a couple of times (at different points of times) and stored in the memory of each server. An average value is calculated from the measured values and is stored in the management information base from where it may be queried for calculating server consolidations.

In some of the embodiments, there is no electric power meter provided since a nominal electric power consumption value is determined by the manufacturer and is inserted into the management information bases of each server. The nominal electric power consumption is a characteristic electric power consumption value based on the measurements of a couple of electric power consumption values. The different values measured are amalgamated into one value, for example, by calculating the geometric or arithmetic mean of them or by applying any other aggregation function.

Regardless whether the electric power consumption is a current or a nominal (fixed) value, it is queryable since it is deposited in the management information base of each server. However, there may be server-related optimization-relevant data which is not stored in the management information bases but which has to be acquired to calculate a consolidated server arrangement. Therefore, a server database system is provided which stores data entries with optimization-relevant data about servers that have been detected in previous consolidations. This data is used to complete the server-related optimization-relevant data that has been discovered by the autodiscovery tool. Furthermore, the data stored in the server database system is also used to select servers that are not available in the unconsolidated infrastructure but which are available for use in the consolidated server arrangement. Besides the server database system, an editor is provided which allows the user to manually enter optimization-relevant data about servers of the first arrangement that could not have been discovered by the autodiscovery tool e.g. since the data is in general not queryable or since a failure has occurred (either on the side of the autodiscovery tool or on the side of the queried server) so that the data could not have been conveyed from the server to the autodiscovery tool. The editor is also used to enter optimization-relevant data about servers that are not used in the unconsolidated server arrangement but which are available for use in the consolidated server arrangement.

In some of the embodiments, a server database system and an editor are provided which enable the data disocovered by the autodiscovery tool to be completed. However, in other embodiments, the server-related optimization-relevant data is only gathered by the server database system so that the consolidation system is implemented without the editor, whereas in other embodiments, the server-related data is gathered by the editor without the server database system.

In some of the embodiments, server-related optimization-relevant data is deposited in the management information bases of the individual servers and is therefore queryable. However, in other embodiments, merely server identifying information, which uniquely identifies a server, is stored in the management information bases of the servers. The server-identifying information is queried and server-related optimization-relevant data stored in the server database system is used to match the server identifying information with the actual optimization-relevant data about the servers. By means of the server database system, optimization-relevant data about servers which are available for use in the consolidated server arrangement but which are not used in the unconsolidated server arrangement is provided. Moreover, an editor is provided which enables optimization-relevant data about servers whose optimization-relevant data is not stored in the server database system to be entered manually.

In some of the embodiments, optimization-relevant data is provided via an editor which pertains to servers that are not used in the unconsolidated server arrangement but which are available for use in the consolidated server arrangement.

Furthermore, the server database system provides data about servers that are not used in the unconsolidated server arrangement but which are available for use in the consolidated server arrangement. Besides, an editor is provided which allows optimization-relevant data which has not been discovered by the autodiscovery tool and which is not obtainable via the server database system either, to be entered manually.

After all optimization-relevant data has been collected, the actual consolidation calculation is initiated. It should be mentioned that the method according to which the optimization-relevant data has been gathered is independent of the method according to which the actual calculation of the consolidated server arrangement takes place. Four methods of determining a consolidated server arrangement are discussed below:
a) Integer Linear Optimization: Brute Force
b) Integer Linear Optimization: Cutting Planes
c) Consolidation rules
d) Extended AOG CapacityPlanner

In some embodiments, the server consolidation is formulated as an optimization problem of the following description:
A) Calculate, given an existing arrangement of servers, a consolidated arrangement of servers by minimizing the total price, under the boundary conditions that the consolidated arrangement of servers has
   a) fewer servers than the existing arrangement of servers,
   b) at least the total CPU performance of the existing arrangement of servers, and
   c) at most the total electric power consumption of the existing arrangement of servers.

In other embodiments, the server consolidation is formulated as an optimization problem of the following description:
B) Calculate, given an existing arrangement of servers, a consolidated arrangement of servers by minimizing the total number of servers needed, under the boundary conditions that the second arrangement of servers has
   a) at least the total CPU performance of the existing arrangement,
   b) at most the total electric power consumption of the existing arrangement of servers, and
   c) at most the price of the existing arrangement of servers.

The examples above may be formulated as linear optimization problems and are preferably solved with a method known as the Simplex Algorithm. Optimization problems are defined via an objective function (the function to be minimized or maximized) and one or more boundary conditions which delimit a solution space. A solution space is the set of all points that are admissible, i.e. which fulfill all boundary conditions. From these admissible solutions, one (or several) point(s) is/are searched which minimize (or maximize) the objective function. That (or these) point(s) is/are the optimal solution(s) of the optimization problem. The Simplex Algorithm is based on the fact that if a given linear optimization problem has an optimal solution, then it must be in one of the corners of a convex solution space polyhedron which is defined by the linear equations of the boundary conditions. It should be mentioned, that, when only admitting linear equations as boundary conditions (as is the case in linear optimization problems), the solution space is always a convex polyhedron. Therefore, the Simplex Algorithm only assesses the corners of the solution polyhedron and thereby finds an optimal solution. However, it is asserted that the Simplex Algorithm in its basic version refers to a continuous solution space, whereas the optimization problems regarded above (as they refer to entire servers) have a discrete solution space.

A discrete solution space (contrary to a continuous solution space) may be traversed by individually assessing each point of the solution space, whereby each point in the solution space represents a specific arrangement of servers. In this context, assessing means inserting a point into the objective function and calculating the objective value pertaining to that point. If the solution space is relatively small in comparison to the computational power provided to perform the calculation, then the solution space may be determined and each individual point from it may be inserted into the objective function. The point that yields the optimal value when it is inserted into the objective function is regarded as the optimal solution of the optimization problem. However, this basic-solution approach is inefficient since in typical integer linear optimization problems the discrete solution space is too large to be traversed point by point in reasonable time.

Solving linear optimization problems with a discrete solution space is the subject of Integer Linear Programming (ILP). A standard method of solving integer linear programs is the so-called "Cutting Planes Method". The method is explained, for example, in Schrijver Alexander, "Theory of linear and integer programming", Chapter 23: Cutting Planes, April 1998, Wiley Publisher. Cutting planes methods are based on the Simplex Algorithm (for the continuous case) mentioned above.

In other embodiments, a consolidated arrangement of servers is calculated by consecutively applying consolidation rules to an initially unconsolidated arrangement of servers. Given a list of optimization-relevant data about different servers, and an optimization problem, then a consolidation rule is defined as an instruction indicating how a set of servers of the list can be replaced with another set of servers whereby - when applying the rule to a concrete arrangement of servers - the arrangement of servers is optimized with regard to the optimization problem. A consolidation rule is noted by means of an arrow having a set of servers on its left side and a set of servers on its right side, e.g. A, B, C -> D, E, which means that servers A, B, C are replaced with servers D and E. A rule is applicable to a concrete server arrangement if its left side exclusively contains servers that are present in the concrete server arrangement. By applying a consolidation rule, the unconsolidated arrangement of servers is improved (in the sense of the optimization problem), and a new server arrangement comes into being. If possible, another rule is applied to this improved server arrangement so that it is further improved, and so on. If no rule is applicable anymore, the consolidation procedure is stopped and the current server arrangement is output via a graphical user interface on a video display. In general, consolidation rules are applied to a server arrangement as long as there are consolidation rules that are applicable. If there are several rules which are applicable, then that rule (among all applicable consolidation rules) which best improves the server arrangement is selected. However, this selection strategy is "greedy" in that it applies the "locally" optimal rule in each iteration, whereas the whole procedure of applying consolidation rules - although each iteration in itself is (locally) optimal - does not necessarily lead to a "globally" optimal server arrangement in the sense of the optimization problem.

In another embodiment, the idea of taking into account the current or nominal electric power consumption of the servers of a server arrangement is integrated into existing server consolidation tools. Exemplarily, the Asset Optimization Group's (AOG) CapacityPlanner (mentioned at the outset) is considered. The CapacityPlanner supports the work of IT staff in that it identifies every server within a given domain and collects its inventory and performance information. It correlates the aggregated data from all servers to create server-load profiles and further compares the measured performance data to a constantly growing repository of more than 700 million performance samples stored and managed by AOG. AOG CapacityPlanner provides enterprises with a decision- support tool for driving lower costs, improving utilization, and obtaining higher performance from every server on the network. Without the installation of agents on the servers to be monitored, AOG CapacityPlanner collects and analyzes the utilization of CPU, memory, disk, network, and applications across an enterprise's entire server base, then presents the findings in reports and charts. The AOG CapacityPlanner provides capacity utilization metrics and trends. It further provides benchmarking and asset-ranking critical condition reports, expandability and balance metrics, ongoing analysis and correlation of utilization and performance statistics plus look-ahead with consolidation recommendations. There are weekly lists of optimization recommendations available and a 'what if' query ability of data and environment is also provided.

In some of the embodiments, to further improve the capabilities of the AOG CapacityPlanner, the system is extended by installing electric power meters in the power-supply unit of each server and collecting their measured data which is embraced into the analysis performed by the CapacityPlanner. In other embodiments, a nominal electric power consumption value is deposited in each server which may be collected and also included into the analysis performed by the CapacityPlanner.

Some of the embodiments of the computer program product with program code for performing the described methods include any machine-readable medium that is capable of storing or encoding the program code. The term "machine-readable medium" shall accordingly be taken to include, for example, solid-state memories and, removable and non-removable, optical and magnetic storage media. In other embodiments, the computer program product is in the form of a propagated signal comprising a representation of the program code, which is increasingly becoming the usual way to distribute software. The signal is, for example, carried on an electromagnetic wave, e.g. transmitted over a copper cable or through the air, or a light wave transmitted through an optical fiber. The program code may be machine code or another code which can be converted into machine code, such as source code in a multi-purpose programming language, e.g. C, C++, Java, C#, etc. The embodiments of a computer system may be commercially available general-purpose computers programmed with the program code.

### Fig. 1: Consolidation architecture on the basis of current electric power consumption:

Returning now to Fig. 1, which illustrates the architecture of an unconsolidated server arrangement 1 which is managed by a network management station 2, which in turn is capable of consolidating the server arrangement 1 by replacing a set of servers 3 of the server arrangement 1 with servers that are eligible for use in a consolidated IT infrastructure and which are determined by an optimization procedure.

Basically, the server arrangement 1 as depicted in Fig. 1 includes two sorts of network components, namely servers 3 and interconnect devices 4 which connect the servers 3 and the interconnect devices 4 among themselves. The interconnect devices 4 include routers, switches etc. and are managed, such as the servers 3, by the network management station 2. However, the management of the interconnect devices 4 is only marginally considered in this context since it is not essential for the consolidation process as such, which focuses on the servers 3.

The network components of the server arrangement 1 are managed via SNMP which has established itself as de facto standard protocol in the domain of Internet network management, so that nowadays network components of almost all manufacturers are manageable via SNMP. SNMP is defined in RFC 1067 and is primarily based on two software components, namely "SNMP agents" and "SNMP managers".

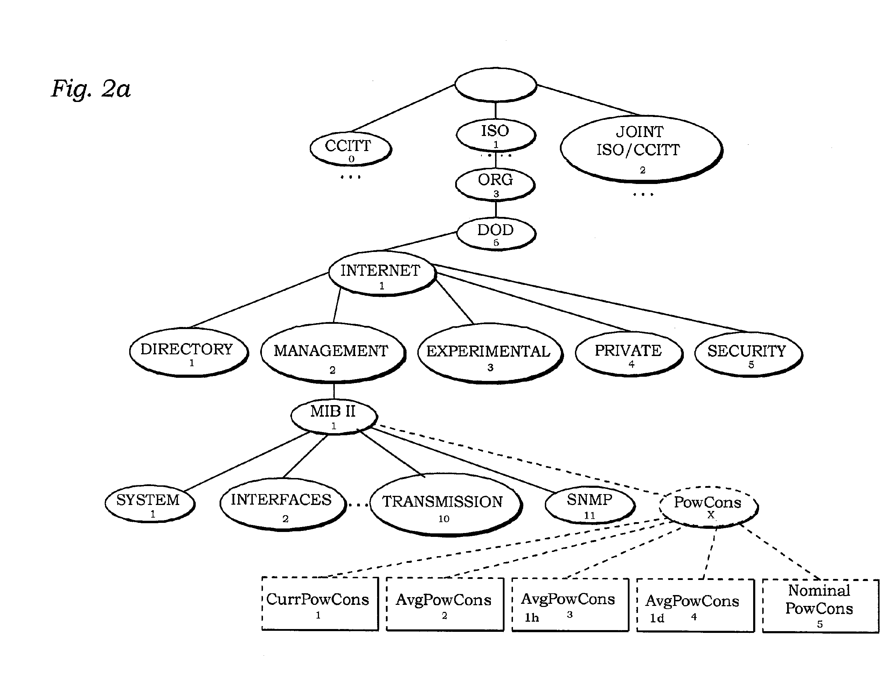

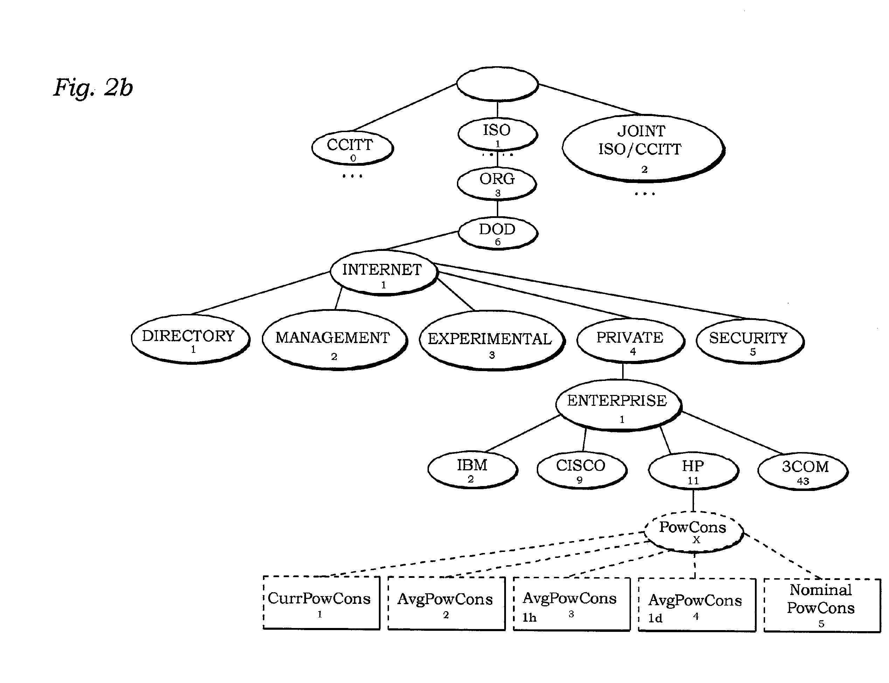

An SNMP agent 6 (referred to as "agent" hereinafter) is a program which constantly runs in the background on its associated managed network component and administrates component-related management information which is stored in a MIB 5. To this end, SNMP agents 6 collect management information of their associated network components and deposit it in the MIBs 5 of the network components. MIBs 5, which will be explained in more detail in Figs. 2a and b, are essentially data collections which are organized in a widely branched directory tree (MIB data structure), associated with each network component. Their purpose is to store management information about individual network components which are administrated by an SNMP manager.

An SNMP manager, here represented in the form of a network management application 11 as part of the network management station 2, requests an agent 6 for component-related management information deposited in its associated MIBs 5 or commands an agent 6 to set management information in the MIBs 5 of its associated network component. To this end, SNMP offers commands (get, get-next, get-bulk, set) for administrating management information. The command "get" requests an item of management information deposited in an MIB 5 of a server 3, the "get-next" command requests the next information item relative to the last management information item requested via the "get" command, "get-bulk" is used to request several management information at the same time. The purpose of the last command is to minimize the number of protocol exchanges required to retrieve a large amount of management information. The command "set" assigns a value to a component-related management information item in the MIB 5 of the corresponding server 3 at a predefined position within the directory tree. Besides querying agents 6 by the SNMP manager (i.e. the network management application 11), SNMP also offers the possibility that an agent 6 autonomously transmits component-related management information to the network management application 11 without being requested beforehand. This asynchronous mode of transmitting information is called "trap" and serves to signalize special events occurring on the servers 3.

Each branch of the directory tree of the MIB data structure ends in a leaf that contains one management information item pertaining to the network component. Therefore, the actual management information data is only located in the leaves of the MIB data structure. Some of the management information, which is typically time-invariant, such as the name of the manufacturer of the network component, is laid down once by the manufacturer of the server 3, whereas other management information, such as free memory space, is permanently updated during the runtime of the network component by its associated agent 6. The agents 6, as depicted in Fig.1, are responsible for collecting the performance values of the CPU's 7 which are also part of the optimization-relevant data 14 needed for the consolidation.

Furthermore, each server 3 is equipped with a power-supply unit 8 which features an electric power meter 9 measuring the current electric power consumption 31 which is gathered by the associated agent 6 and deposited on a regular basis at an appropriate position within the MIB data structure of each server 3. From a hardware technical point of view, the power meters 9 are connected with a local bus system via which they deliver the measured current electric power consumption 31 of the servers 3.

Hence, the agents 6 of all network components are in contact via SNMP connections 10 with the network management application 11 which centrally collects SNMP-queryable management information 20 associated with each network component and deposited in each MIB 5, e.g. current electric power consumption 31, current CPU performance, free memory space, and name of manufacturer. A part of this SNMP-queryable management information 20 is also part of the optimization-relevant data 14 which is deposited in each MIB 5, e.g. electric power consumption, CPU performance. The optimization-relevant data about each server 3, as a whole, further includes optimization-relevant data which is not stored in the MIBs 5 (and therefore not queryable via SNMP), such as the price of each server. The CPU performance 33 is typically a benchmark value which is measured in MIPS (Million Instructions Per Second) or FLOPS (Floating Point Operations Per Second).

The network management application 11 is part of an autodiscovery tool 12 which is capable of generating a relational data model 23 representation of the server arrangement 1 according to the component-related management information which is deposited in the MIBs 5 and which is collected and provided by the network management application 11. However, it should be mentioned that not all interconnect devices, such as hubs and repeaters, are in general queryable via SNMP since they do not possess an lP address. As for the unconsolidated server arrangement 1, it is assumed that all depicted interconnect devices 4 are queryable via SNMP. In the relational data model 23, all component-related data acquired via SNMP 18 (not only optimization-relevant data) is put into tables having a number of attributes. Furthermore, by means of the autodiscovery tool 12, the topology of the server arrangement 1 is calculated which is also represented within the relational data model 23. The autodiscovery tool 12 is connected with a consolidation tool 13 which stores all optimization-relevant data 14. Furthermore, the consolidation tool 13 features an aggregation function 24 which allows attributes with a numerical domain to be added together. For instance, the total electric power consumption (i. e. the sum of all electric power consumption values of all servers 3) or the total number of servers 3 of the unconsolidated server arrangement 1 can be calculated and integrated into the relational data model 23. The data from the relational data model 23 which is needed for the consolidation is imported into the optimization-relevant data 14 of the consolidation tool 13. Since the optimization-relevant data 14 may be incomplete, the consolidation tool 13 is further connected with a server database system 17 containing server-related optimization-relevant data (CPU performance, current electric power consumption) which was detected in previous consolidations. The server database system 17 therefore also stores optimization-relevant data 22.1 gathered from earlier consolidations pertaining to data which is not obtainable via the network management application 11 and which is used to complete the optimization-relevant data 14 obtained from the relational data model 23. Furthermore, if there is still optimization-relevant data 14 missing, an editor 16 enables the incomplete optimization-relevant data 14 to be completed. The editor 16 is provided to manually enter optimization-relevant data 21.1 about servers 3 which is not obtainable via the network management application 11 (i.e. since the data is unavailable in the servers 3 or is not deposited in the MIBs 5 and is therefore not attainable using SNMP), but which is needed for consolidating the server arrangement 1 by the consolidation tool 13.

The editor 16 is further provided to manually enter optimization-relevant data 21.2 about servers which are not used in the server arrangement 1 but which are available for use in a consolidated server arrangement 19 into the server database system 17. The server database system 17 also stores optimization-relevant data 22.2 about servers detected during previous consolidations which are not used in the server arrangement 1 but which are available for use in the consolidated server arrangement 19. The consolidation tool 13 features an optimization engine 15 which, on the basis of the optimization-relevant data 14, calculates a consolidated server arrangement 19 and hands the result over to the graphical user interface 18 which displays the consolidated server arrangement 19. The graphical user interface is further connected to the server database system 17 to display the data entries stored in it.

### Fig.2: Extended Internet registration tree:

Fig. 2a shows an extract of the hierarchical Internet registration tree. Network management information 20 is deposited in the MIBs 5 of each network component, whereby an MIB 5 is typically a simple ASCII file written in ASN.1 "Abstract Syntax Notation" which defines information objects and their contents. The management information 20 is hierarchically organized in the form of a tree whose individual nodes are assigned numbers, whereby only leaf nodes, indicated as rectangular nodes, reference component-related management information. All other nodes, indicated as oval nodes, merely serve as directories. A path within the tree leading from the root to a leaf is represented by an OID (object identifier) which is a concatenation of the names (or numbers) assigned to the individual nodes (separated by dots) which are traversed on the way to a certain leaf. Hence, each item of management information stored in a leaf of the tree is addressable via an OID.

On the highest level of the Internet registration tree, there are three nodes, each representing an organization responsible for the standardization of SNMP, so that currently three top-level nodes exist. The node pertaining to CCITT (Comité Consultatif International Téléphonique et Télégraphique) is assigned "0", the node referring to ISO (International Standard Organization) is assigned "1" and the node referring to joint work of CCITT and ISO is assigned "2". In the IETF standard RFC 1213, the OIDs standardized in SNMP are derived from the node "ISO", via the intermediate levels "ORG" (organizations), "DOD" (department of defense) and "Internet". The part of the Internet registration tree below "Internet" represents the least common denominator of all SNMP implementations, and all these OIDs start with 1.3.6.2.1. The Internet registration tree provides, for instance, access to the management information iso.org.dod.internet.mgmt.mib-2.system.SysUpTime, which is equally accessible via the numerical series 1.3.6.1.2.1.1.3.

Beneath node "management", there is a node "MIB II". Since SNMPv1 (version 1) and its associated MIB (MIB I) data structure (Internet registration tree) could not satisfy many wishes of users, it was decided to extend MIB I with the release of SNMPv2 (RFC 1450). The extension of MIB I, called MIB II, was directly integrated into the existing data structure MIB I below the node "management".

In the Internet registration tree, there exists a node (directory), which is provided for enterprises (iso.org.dod.internet.private.enterprises, or 1.3.6.1.4.1) where SNMP-queryable management information 20 which is specific for network devices of a certain enterprise can be stored. As is the case with IP addresses, the IANA (Internet Assigned Numbers Authority) assigns number domains, e.g. management information concerning CISCO network devices have OIDs starting with 1.3.6.1.4.1.9.

On the group-level, which is the penultimate level, there are currently ten nodes provided. A further node is added which is referred to as "PowCons" and has the OID 1.3.6.1.2.1.x, where x denotes an unused MIB subtree, which is not yet defined in the standardized Internet registration tree. This node represents a directory for management information concerning electric power consumption and has five leaf nodes storing SNMP-queryable electric power consumption values. The following table gives an overview of the electric power consumption values accessible within this group:

| OID of leaf node | Name | Description |
|---|---|---|
| 1.3.6.1.2.1.x.1 | CurrPowCons | Currently measured electric power consumption (electric power meter required) |
| 1.3.6.1.2.1.x.2 | AvgPowCons | Average electric power consumption of all measured electric power consumption values (electric power meter required) |
| 1.3.6.1.2.1.x.3 | AvgPowCons1h | Average electric power consumption of all measured electric power consumption values during the last hour (electric power meter required) |
| 1.3.6.1.2.1.x.4 | AvgPowCons1d | Average electric power consumption of all measured electric power consumption values during the last day (electric power meter required). |
| 1.3.6.1.2.1.x.5 | NominalPowCons | Nominal electric power consumption, determined by manufacturer (no electric power meter required). |

It should be mentioned that not all electric power consumption values are available in all network devices. For example, if a network device does not feature an electric power sensor, then the first four values shown in the table above are not available since they require the measurement of electric power consumption values. Furthermore, also the nominal electric power consumption is not available in the MIB if the manufacturer of the device does not provide the nominal electric power consumption value.

The data structure shown in Fig. 2a is the standardized Internet registration tree which is extended, according to embodiments of the invention, in such a way that it further contains a group node referenced by OID 1.3.6.1.2.x, named "PowCons", which offers an appropriate directory within the Internet registration tree for data about storing electric power consumption values 30 of a network component. If, for example, the network management application 11 queries the current electric power consumption of server 3.2, this is achieved via the command snmpget server2.public.iso.org.dot.internet.mngt.mib-2.PowCons.CurrPowCons.0. Since, at present, there are in fact no leaves in the Internet registration tree provided for storing the electric power consumption 30 of a network component, the nodes are hypothetical and are therefore indicated in dashed lines.

Fig. 2b shows an alternative way of extending the standardized Internet registration tree (as defined in RFC 1213). It should be mentioned that the Internet registration tree is extensible in that it provides a node "Enterprise" in which enterprises are enabled to customize the Internet registration tree according to their wishes. Below this node and the node "Hewlett Packard", the data structure as shown in Fig. 2b is extended by a group-node "PowCons" which references electric power consumption. Instead of integrating the "PowCons" node into the general part of the Internet registration tree by running through a standardization process, a group-node "PowCons" within the "Hewlett Packard" section of the Internet registration tree is requested at the IANA (which should be a less time-consuming approach). Extending the standardized Internet registration tree within the "Enterprise" subtree could therefore be done as long as the standardization process mentioned in the description of Fig. 2a has not been finished. It should be mentioned that a standardization is advantageous in that the electric power consumption of all devices, regardless of their manufacturer, can then be requested in a uniform manner.

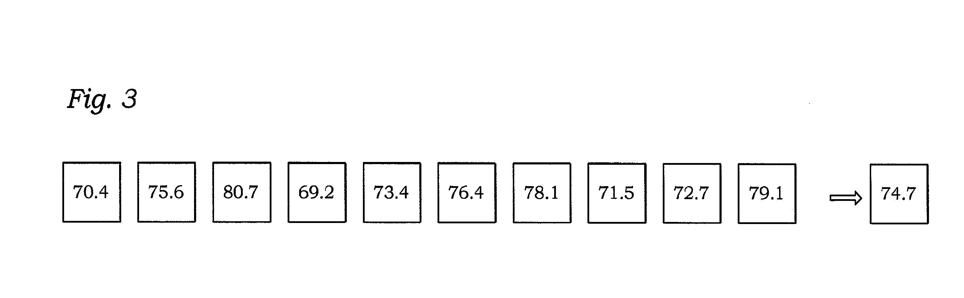

### Fig. 3 : Calculation of average electric power consumption:

Fig. 3 refers to another exemplary embodiment, in which an add-on is provided to the architecture of Fig. 1. In this embodiment, the electric power consumption values deposited in the MIBs 5 are not current electric power consumption 31 values, which are permanently updated by the SNMP agent 6. Rather, an average value is calculated from ten electric power consumption values measured by the power meters 9 of the servers 3 at ten different points of time. Fig. 3 shows ten exemplary measured electric power consumption values which are stored in the memories of the individual servers 3. An average value is calculated from the ten measured electric consumption values since the electric power consumption 30 of the servers 3 is not a fixed value but alters, for instance, depending on the load a processor has to cope with. Therefore, the calculation of an average value from ten measured values yields a value which is more representative than a value measured at an arbitrary point of time.

In the architecture of Fig. 1, the current electric power consumption 31 values of the servers 3 which are used for calculating the consolidated server arrangement are those which were measured most recently before the calculation of a consolidated server arrangement was initiated. At that specific point of time, however, the current electric power consumption 31 of the servers 3 may not have been characteristic. To get typical electric power consumption values, an average value is calculated from the ten electric power consumption values which are measured at ten arbitrary points of time. In each server, the calculated average value is set by an SNMP agent 6 at an appropriate position (as shown in Figs. 2a and b) in the extended MIB data structure.

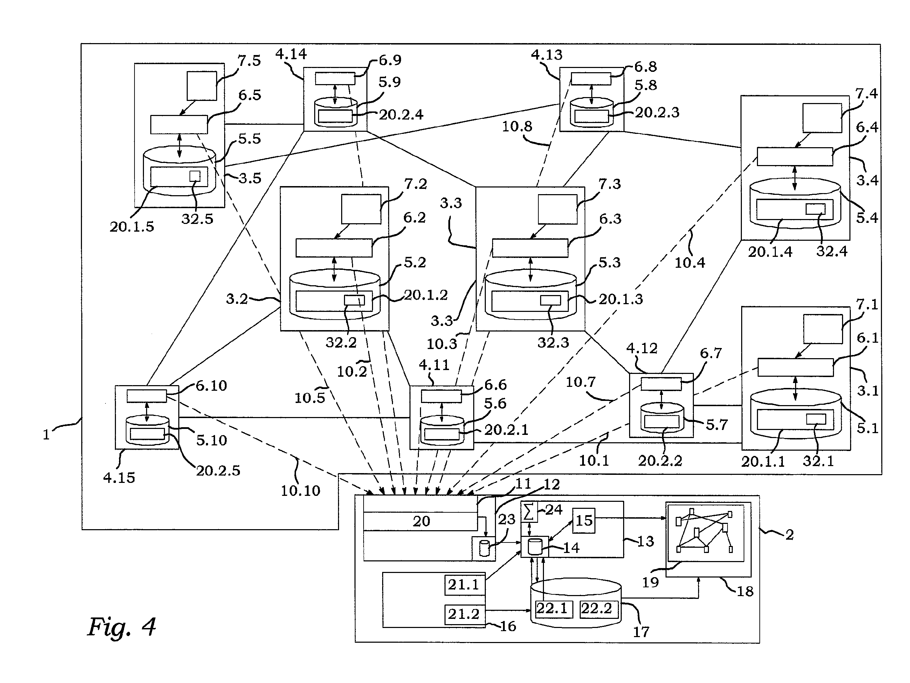

### Fig. 4: Consolidation architecture on the basis of nominal electric power consumption:

While Fig. 1 illustrates an exemplary architecture in which each server 3 is equipped with a power meter 9 measuring the current electric power consumption 31 of a server 3, Fig. 4 shows a variation of the architecture in such a way that the electric power consumption of the servers 3 is not the current electric power consumption 31 value but a nominal electric power consumption 32 value. Hence, the electric power consumption of the individual servers 3 is not measured by power meters 9 and is not regularly inserted by the SNMP agent 6 into the MIBs 5. Rather, the nominal electric power consumption 32 value which is determined by the manufacturer is inserted once into the MIB 5 of each server 3 after its manufacturing. Therefore, the power meters 9, as shown in Fig.1, are not necessary in this embodiment. The electric power consumption of the servers 3 is a fixed (nominal) value indicating an average value calculated from several electric power measurements made by the manufacturer since the electric power consumption of a server 3 is not a constant value. Other optimization-relevant data, however, such as the current CPU performance, is gathered by the SNMP agent 6 and inserted by the agent 6 into the MIB 5. It is asserted that the requesting of the electric power consumption value by the network management application 11 is irrespective of whether the current electric power consumption 31 or the nominal electric power consumption 32 is requested.

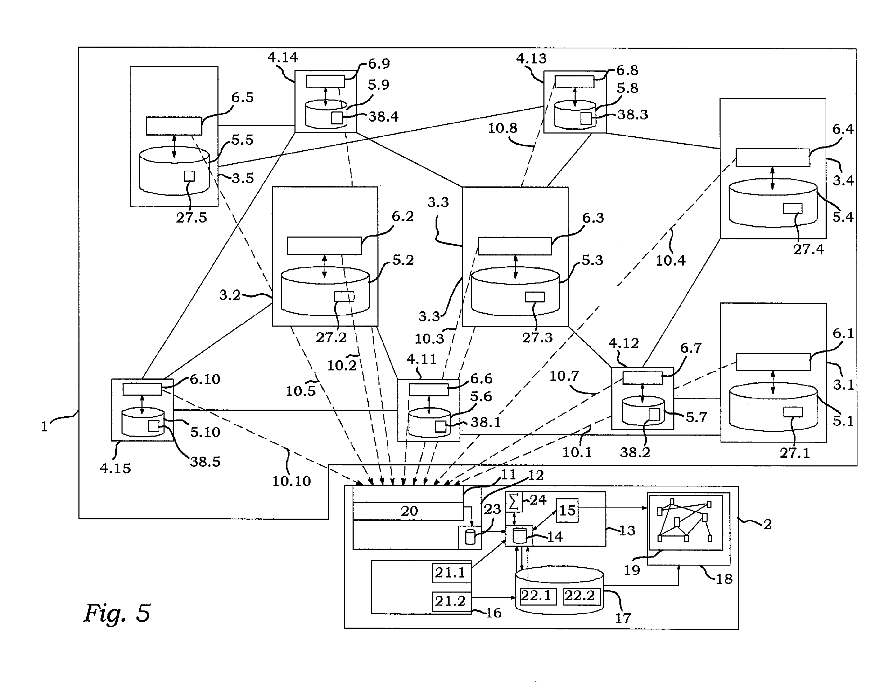

### Fig. 5: Consolidation architecture on the basis of server- and interconnect-device-identifying information:

Fig. 5 shows another exemplary architecture of the unconsolidated server arrangement 1 and the network management station 2. In contrast to the two previous architectures, as shown in Fig. 1 and Fig. 4, no optimization-relevant data about the servers 3 and the interconnect devices 4 needed for the consolidation is conveyed to the network management application 11. The only data needed from the network components are identifiers which uniquely identify them. This variation of the two previous embodiments (Figs. 1 and 4) is reasonable since, at present, the standardized MIB data structure does not provide any leaf node where the electric power consumption of a network component could be stored. Therefore, an extension of the MIB data structure, as shown in Fig. 2, is needed before the electric power consumption 30 can be directly requested from the servers 3 via SNMP. The present embodiment, however, enables consolidation of the server arrangement 1, also taking into account the nominal electric power consumption 32 of each server 3, without having to query the nominal electric power consumption 32 from each server 3 by the network management application 11 via SNMP. Instead, the autodiscovery tool 12 is run and a reduced relational data model 23' is obtained. The reduced relational data model 23' merely contains a server id 25 and the name of the manufacturer 26 of the server which uniquely identify each server and which are referred to as server identifying information 27. The interconnect devices 4 are uniquely identified by a manufacturer specific id 36 and the name of the manufacturer 37. This data is referred to as interconnect device identifying information 38 and is transferred to the network management application 11.

The server-and interconnect-device-identifying information 38, 27 are obtained by the network management application 11 via SNMP from the leaf node iso.org.dod.lnternet.mgmt.mib-2.system.sysdescr (1.3.6.1.2.1.1.1) of the standardized MIB data structure. This leaf node provides a textual description of the network component including the full name and version identification of the system's hardware type, software operating-system, and networking software. The reduced relational data model 23' further includes a topology table 14.3 which stores the connections between the servers 3 and the interconnect devices 4 and the interconnect devices 4 themselves. The reduced relational data model 23' is imported into the consolidation tool 13, where, by means of the conveyed server and interconnect device identifying information 38, 27, the server database system 17 is capable of identifying each server 3. Since the server database system 17 stores optimization-relevant data about servers detected in previous consolidations it is capable of assigning its stored optimization-relevant data to the conveyed server-ids 26 by importing its optimization-relevant data 22.1' into the consolidation tool 13. If some server identifying information 27 cannot be matched with the optimization-relevant data stored in the server database system 17, since it is not stored in the server database system 17, an editor 16 is provided by means of which a user is enabled to manually enter server-related optimization-relevant data 21.1'. Subsequently, the server database system 17 is updated with new data. Furthermore, the optimization-relevant data about servers which are available for use in the consolidated server arrangement 19 but which are not used in the existing server arrangement 1 are also available via the server database system 17.

Furthermore, a user may manually enter optimization-relevant data 21.2 pertaining to servers 3 which are not used in the existing server arrangement 1 but which are available for use in the consolidated server arrangement 19. The user may take this data for example from catalogues or advertisements offering new servers that a user deems eligible for the consolidated server arrangement 19. The user is therefore provided with the possibility to manually enter all optimization-relevant data about servers 3 which are used in the server arrangement 1 or about servers 3 s/he wants to take into consideration for replacing servers 3 of the existing server arrangement 1 in the course of the consolidation.

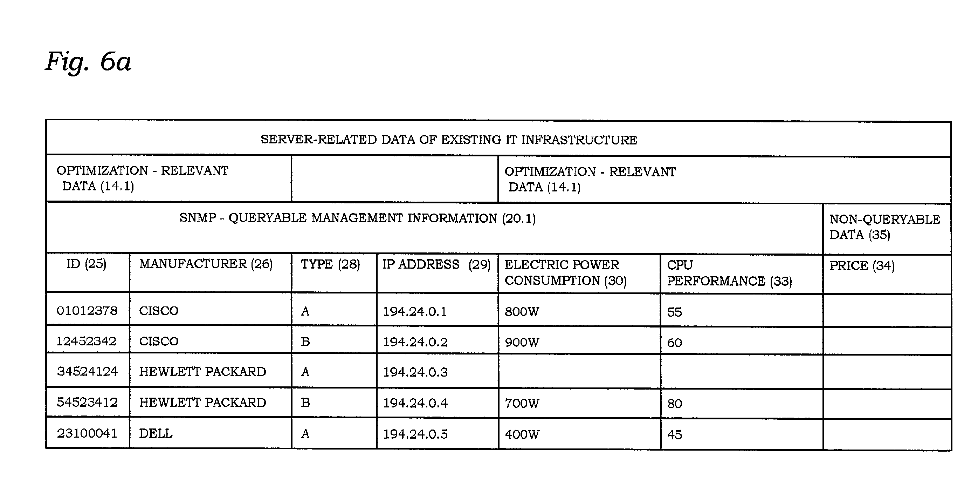

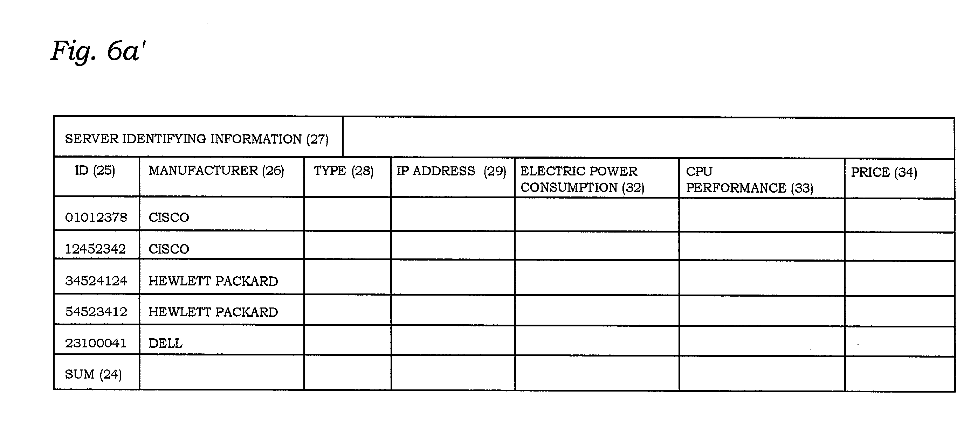

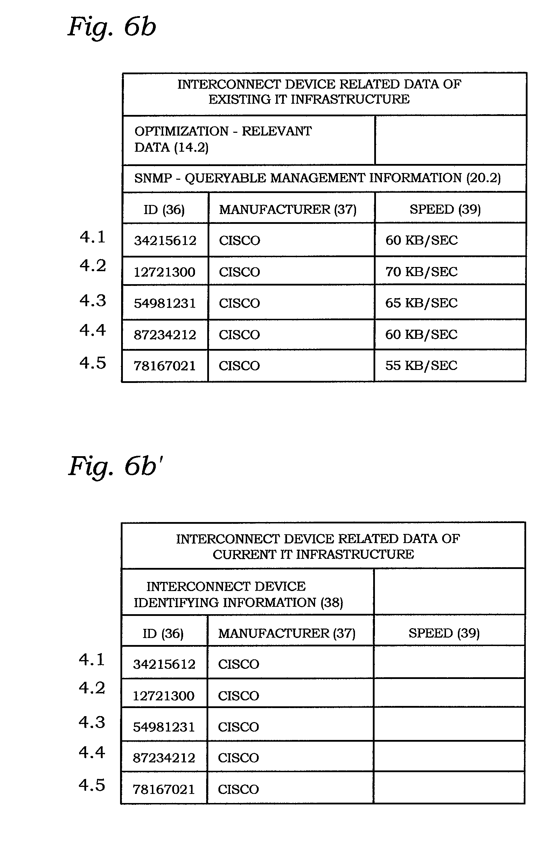

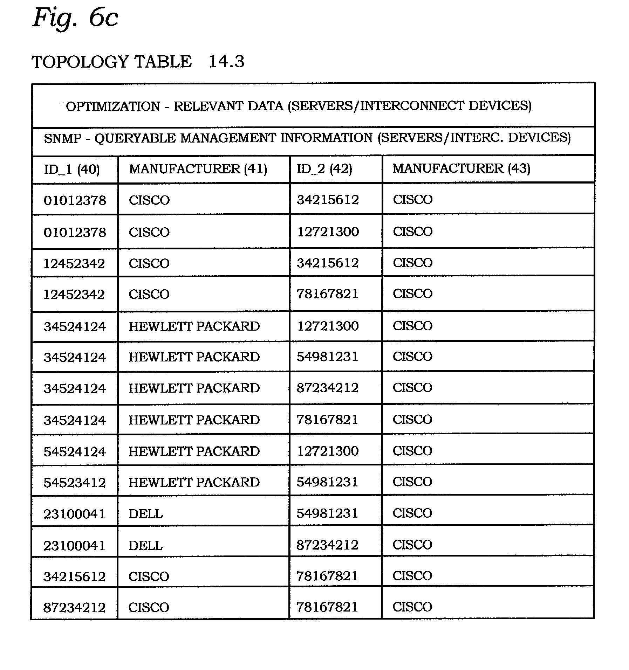

### Fig. 6: Relational data model:

Figs. 6a - c show the relational data model 23 generated by the autodiscovery tool 12 from the SNMP-queryable management information 20 collected by the network management application 11.

Table 6a, which refers to the architectures of Figs. 1 and 4 in which the electric power consumption is queried via SNMP, shows all attributes of the servers 3 (i.e. the server-related data about the server arrangement 1) discovered by the autodiscovery tool 12. The individual attributes are a manufacturer-specific server id 25, manufacturer 26, type 28, IP address 29, electric power consumption 30 (either current or nominal), CPU performance 33 and price 34 of the servers 3. Since the prices 34 of the servers 3 are not deposited in their MIBs 5, they are not SNMP-queryable via the network management application 11 and, consequently, the autodiscovery tool 12 is unable to import the data into its relational data model 23. Furthermore, the electric power consumption 30 and the CPU performance 33 of the Hewlett Packard server 34524124 - albeit in principle SNMP-queryable and therefore autodiscoverable - could not have been discovered. This may be due to a failure of the network management station 2 or the server itself 3.3. The server-related optimization-relevant data 14.1 of the relational data model 23, as far as it could have been collected by the network management application 11, is imported into the optimization-relevant data 14 of the consolidation tool 13. With reference to the architectures as presented in Fig. 1 and Fig. 4, it should be mentioned that in the table 6a, the attribute "electric power consumption" 30 refers to the current electric power consumption 31 measured by power meters 9 in the case of Fig. 1. In the architecture as depicted in Fig. 4, the attribute "electric power consumption" 30, however, refers to the nominal electric power consumption 32, which has been determined and inserted into the MIBs 5 by the manufacturer.

Fig. 6a' shows the server-related data about the server arrangement 1 as part of the reduced relational data model 23' with reference to the architecture of Fig. 5. In this case, the nominal electric power consumption 32 is not stored in the MIBs 5 and is therefore not SNMP-queryable. Other attributes pertaining to server-related optimization-relevant data 14.1 such as CPU performance 33 or price 34 may be SNMP-queryable, but they are not queried by the network management application 11. Instead, the server-related optimization-relevant data 14.1 is obtained from the server database system 17 and the editor 16 by means of the server identifying information 27. Since only the server identifying information 27 of all servers 3 of the server arrangement 1 is transferred to the network management application 11, the attributes type 28, IP address 29, nominal electric power consumption 32, CPU performance 33 and price 34 are void in the reduced relational data model 23'. The server identifying information 27 is imported into the optimization data 14 of the consolidation tool 13.

A further table in Fig. 6b indicates interconnect device-related data about the server arrangement 1 which has been gathered by the network management application 11 and has been integrated into the relational data model 23 by the autodiscovery tool 12. The attributes of the interconnect devices 4 are a manufacturer-specific interconnect device id 36, name of the manufacturer 37, and transmission speed 39. All interconnect device-related data 38 has been gathered by the network management application 11 and has been merged into the relational data model 23. Since the interconnect device-related data is only needed for the consolidation in terms of the topology of the server arrangement 1, the only optimization-relevant data about interconnect devices 14.2 is their id 36 and their manufacturer 37. The optimization-relevant data about the interconnect devices 14.2 is imported from the relational data model 23 stored in the autodiscovery tool 12 into the optimization-relevant data 14 of the consolidation tool 13.

In the reduced relational data model 23', as shown in Fig. 6b', the only data gathered from the interconnect devices 4 is their id 36 and their manufacturer 37. These two attributes are referred to as "interconnect device identifying information" 38 which is imported from the relational data model 23' stored in the autodiscovery tool 12 into the optimization-relevant data 14 of the consolidation tool 13.

A third table 6c is depicted which represents the topology of the server arrangement 1 by storing the connections between the servers 3 and the interconnect devices 4 and between the interconnect devices 4 themselves. Table 6c, which is also referred to as topology table 14.3, is imported into the optimization-relevant data 14 of the consolidation tool 13.

It should be mentioned that it makes no difference whether the table 6c is made on the basis of the relational data model 23 or of the reduced relational data model 23' since all data needed to make the table 6c is also available in the reduced relation data model 23'.

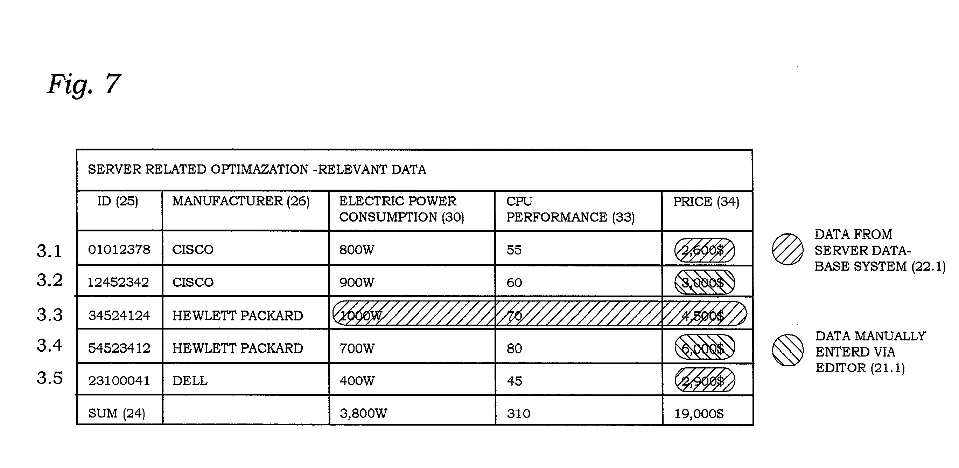

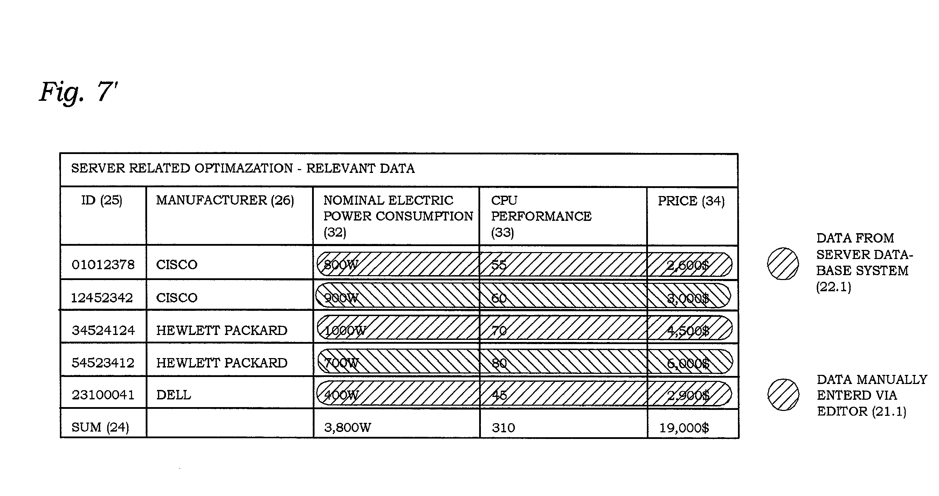

### Fig. 7: Completing optimization-relevant data:

Since not all server-related optimization-relevant data 14.1 of the unconsolidated server arrangement 1 could be gathered by the network management application 11, Fig. 7 shows the server-related optimization-relevant data 14.1 imported from the relational data model 23 into the consolidation tool 13. The incomplete server-related optimization-relevant data 14.1 is completed there with data from the server database system 17 and the editor 16.

At first, the server database system 17 is browsed in order to find data which completes the server-related optimization-relevant data 14.1. In the given case, it is found that Cisco's server with the id 01012378 costs 2,600$. Hewlett Packard's server with the id 34524124 costs 4,500$ and Dell's server 23100041 costs 2,900$. Furthermore, by looking into the server database system 17, it is figured out, that Hewlett Packard's server 34524124 has an electric power consumption of 100 Watt and a CPU performance of 70. The data used to complete the table is optimization-relevant data 22.1 gathered from previous consolidations pertaining to data which is not obtainable via the network management application 11. In the server database system 17, there is no data stored concerning Cisco's server 12452342 and Hewlett Packard's server 54523412. Therefore, the missing data 21.1 has to be manually completed by means of the editor 16. The user may take the information about the prices 34 of the two servers for example from catalogues of the two companies or any other source of information.

Fig. 7' refers to an embodiment in accordance with the exemplary architecture of Fig. 5, where only the server identifying information 27 of the reduced relational data model 23' is available, and therefore more server-related optimization-relevant data 14.1 has to be completed. In the server database system 17, the nominal electric power consumption 32, CPU performance 33 and price 34 of the servers Cisco 01012378, Hewlett Packard 34524124 and Dell 23100041 is retrieved. The data is imported from the server database system 17 into the optimization-relevant data 14 stored in the optimization tool 13. The optimization-relevant data 14.1 that is still missing is manually entered via the editor 16 into the optimization-relevant data 14. The electric power consumption 32, the CPU performance 33 and the price 34 of Cisco's server 12452342 and Hewlett Packard's server 54523412 are manually entered via the editor 16.

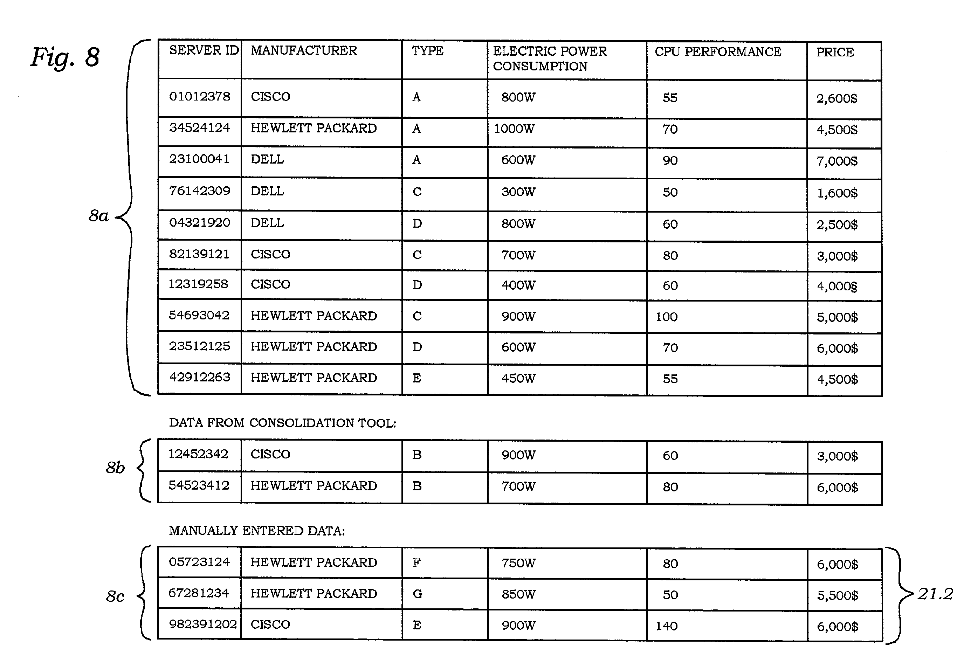

### Fig. 8: Update process of server database system:

Fig. 8 illustrates the update process of the server database system 17. From now on, it is no longer necessary to make a distinction between architectures of Fig. 1 and 4 on the one hand, and architecture of Fig. 5 on the other hand.

Fig. 8a shows the server database system 17 before the update process. It contains server-related optimization-relevant data 14.1 that has been collected in previous consolidations. In a first iteration, the server database system 17 is updated with the server-related optimization-relevant data 14.1 about the (reduced) relational data model 23 (23'), as shown in Fig. 8b. The server database system 17 adopts the data entries that are new for it into its database.

In a second iteration, as depicted in Fig. 8c, the user manually enters optimization-relevant data 21.2 about servers that are not used in the server arrangement 1 but which are available for use in the consolidated server arrangement 19. These are mostly servers that have only recently been released onto the market and therefore were not detected in previous consolidations.

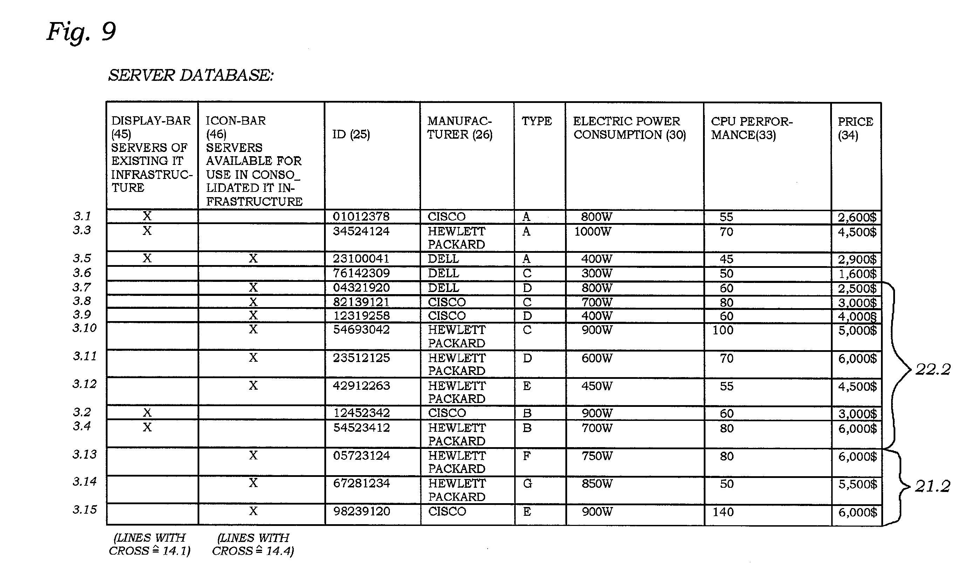

### Fig.9 : Selection of servers:

Fig. 9 shows all server-related optimization-relevant data 14.1 stored in the server database system 17. This data includes the data from the (reduced) relational model 23 (23') generated by the autodiscovery tool 12 and optimization-relevant data 22 from earlier consolidations, and optimization-relevant data 21 manually entered via the editor 16. The optimization-relevant data 14.1 about servers 3.1-3.5 of the server arrangement 1 are automatically indicated in display-bar 45. In icon-bar 46, the user manually ticks those servers that s/he wants to actually take into account when calculating the consolidated server arrangement 19. One should be aware of the fact that the user does not tick an individual server (referenced by its id and manufacturer) that s/he wants to consider in the consolidation but rather refers to a type of server that s/he wants to take into account for the consolidation calculation. The ticked data entries of this column correspond to the optimization-relevant data 14.4 about servers that are taken into account for consolidation of the server arrangement 1. As far as it is not part of optimization-relevant data 14.1 (which has already been fed into the consolidation tool 13), optimization-relevant data 14.4 is now imported into the consolidation tool 13.

The task of the consolidation tool 13 is to consolidate the unconsolidated server arrangement 1. In this case, this means calculating a set of servers which are to be replaced in the consolidated server arrangement 19 in order to optimize the existing server arrangement 1 according to one or more optimization criterion, including electric power consumption 30.

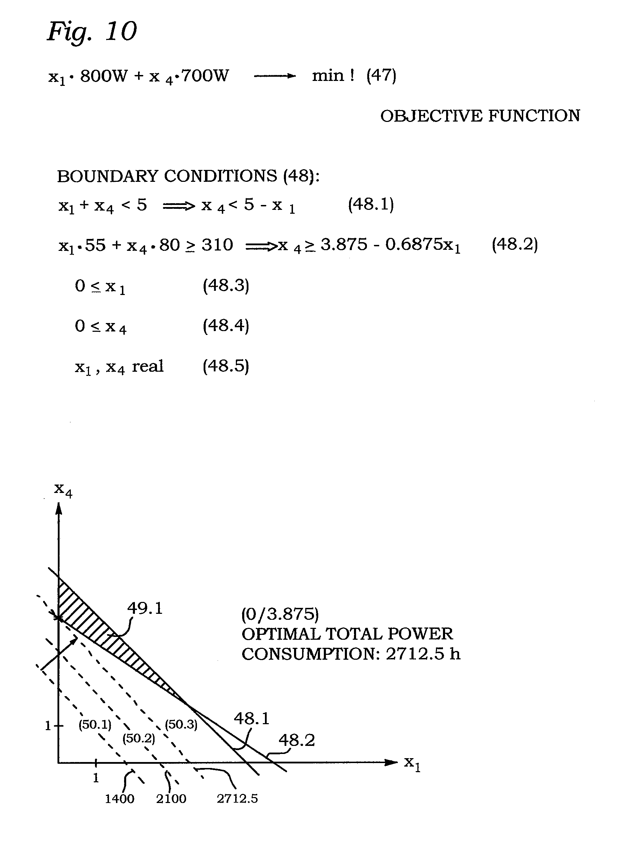

### Fig. 10: Linear optimization:

At this stage, the data acquisition of the optimization-relevant data 14 has been completed. Different architectures and the corresponding way of getting the optimization-relevant data 14 have been shown so far. Now, the consolidation tool 13 possesses all optimization-relevant data 14 about the unconsolidated server arrangement 1, i.e. the information that the unconsolidated infrastructure 1 includes five servers 3 with a total CPU performance of 310 units, a total electric power consumption of 3,800 W and a total price of 19,000 $. The optimization-relevant data 14 further includes the optimization-relevant data 14.4 about the servers that the user has selected as potential constituents of the consolidated server arrangement 19. Now, the optimization engine 15 is responsible for calculating the consolidated server arrangement 19 from the input optimization-relevant data 14. There a several approaches possible. In one embodiment, the optimization engine 15 calculates the consolidated server arrangement 19 on the basis of the following exemplary optimization problem:
Calculate a consolidated server arrangement 19 by minimizing the total electric power consumption, under boundary conditions 48 that the consolidated infrastructure 19 has fewer than five servers, and at least the total CPU performance of the server arrangement 1 (310 units).

Another type of optimization problem, based on multi-level optimization, is formulated as follows:
(A) Find the ten IT infrastructures with the lowest total prices having at least the total CPU performance of the current infrastructure 1. Select among these server arrangements the one with the lowest total electric power consumption.
(B) Find the ten IT infrastructures with the lowest total electric power consumption having at least the total CPU performance of the current infrastructure 1. Select from among these server arrangement the one with the lowest total price.

It should be mentioned that the optimization problems given above are only examples. There are many more optimization problems conceivable in the present case.

From a mathematical point of view, the optimization problems formulated above are typically solved by applying the theory of linear optimization. Problem (1) can be regarded as finding an optimal ten-dimensional vector (xᵢ, 1 <=i<=10), whereby xᵢ indicates how many servers of type i are needed in the consolidated server arrangement 19. The optimization problem can therefore be mathematically formulated as follows:

| |
|---|
| x₁*400W + x₂*800W + x₃*700W + x₄*400W + x₅*900W + x₆* 600W + x₇*450W + x₈*750W+x₉*850W+x₁₀*900W->min! |

| Boundary conditions 48: |
|---|
| X₁+X₂+X₃+X₄+X₅+X₆+X₇+X₈+X₉+X₁₀<5 |
| x₁*45+x₂*60+x₃*80+x₄*60+x₅*100+x₆*70+x₇*55+x₈*80+x₉*50+x₁₀*140 >= 310 |
| 0<=Xᵢ |
| xᵢ integral |

In the given case, the space of possible solutions (solution space) is a convex polyhedron in the ten-dimensional space N¹⁰, whereby N is the set of natural numbers (including 0). The convex polyhedron is a set of points which fulfill all boundary conditions. An admissible solution (i.e. a point within the solution space) is for example a first point (0,0,0,0,2,1,1,0,0,0). This solution refers to a server arrangement with 4 servers (two servers of type 5, one server of type 6 and one server of type 7) having a total CPU performance of 325. If one wants to assess the solution in terms of its optimality, the point is inserted into the objective function 47 and thereby it is determined that the total electric power consumption of the server arrangement represented by the first point is 2850 Watt. A second point (0,0,2,0,1,0,0,1,0) is also an admissible solution (since it fulfills all boundary conditions 48) and refers to a server arrangement with a CPU performance of 310. By inserting the second point into the objective function 47, one receives the value 3150 Watt for the total electric power consumption of the server arrangement represented by that point. As one can see, the second point (i.e. the second server arrangement tested) refers to a worse solution in terms of the objective function 47 since its total electric power consumption is 300 Watt higher than the total electric power consumption of the server arrangement represented by the first point. Since the solution space only contains a finite set of points, it is in principle possible to determine all points within the solution space and assess them by inserting them into the objective function 47. Since the cardinality of the solution space is typically huge, this brute-force way of assessing all points within the solution space is inefficient and does not yield a result in reasonable time.

However, there are more efficient methods for solving linear optimization problems. Fig. 10 illustrates the functioning of the Simplex Algorithm in a continuous two-dimensional case, in which the optimal solution is found geometrically. Since the linear optimization problem (1) discussed above refers to a ten-dimensional space which cannot be depicted in the drawing plane, a two-dimensional sub-problem of problem (1) is considered. It is assumed that the server arrangement 1 is consolidated by means of servers 3 of type 3.1 and 3.4 (namely servers with 800W and 700W electric power consumption and 55 and 80 CPU performance). The objective function 47 (in this case the function to be minimized) is given by x₁*800 Watt + x₄*700 Watt -> min!. The boundary conditions 48 are x₁+x₄ < 5 (48.1), x₁*60 + x₄*80 >= 310 (48.2), x₁, x₄ non-negative real numbers (48.3-48.5). The boundary conditions 48 define a continuous convex solution space polyhedron 49. Furthermore, dashed lines 50 are defined indicating at which points the objective function 47 adopts a certain value. These lines 50 are also called iso-potential lines of the objective function 47. In the given example, for all points lying on the same iso-potential line, the objective function 47 has the same value, e.g. for all points lying on iso-potential line 50.1, the objective function 47 adopts the value 140. However, all points on line 50.1 lie outside the solution space 49 so that the objective value 140 is too little. To find a minimal solution, the dashed line 50.1 is shifted in parallel fashion towards the solution space 49. Then, the line 50.1 is transformed into 50.2 and finally into line 50.3. At this stage, the shifted iso-potential line 50.3 and the solution space 49 intersect for the first time and an optimal solution is found. As can be read from the diagram, point (0/ 3.875) is the optimal solution. This means that zero servers 3 of type 3.1 and 3.875 servers 3 of type 3.4 are needed to minimize the total electric power consumption under the given boundary conditions 48. Inserting the point into the objective function yields 2712.5 Watt as the value of the objective function 47.

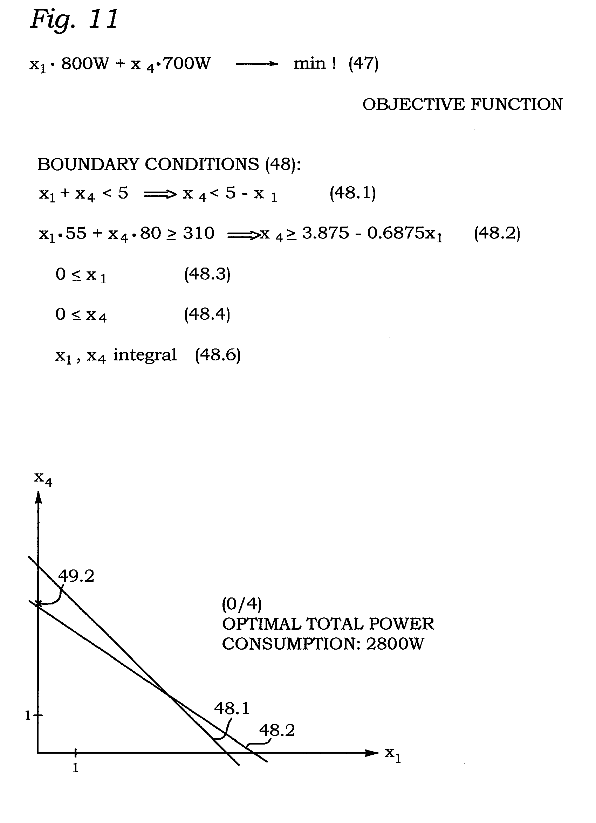

### Fig. 11: Integer linear optimization problem:

However, the result above is not useful, since when optimizing IT infrastructures, it only makes sense to consider entire servers; fractions of servers are not reasonably defined. The Simplex Algorithm in its basic version, though, is not applicable to linear optimization problems in which the solution space is a set of discrete points. Therefore, Fig. 11 illustrates the same optimization problem as shown in Fig. 10 except that the boundary condition 48.5 (x₁, x₄ non-negative real numbers) has been replaced with boundary condition 48.6 (x₁, x₄ non-negative integer numbers). This change of boundary conditions 48 causes the corresponding discrete solution space 49.2 to be reduced to one point. Since the solution space 49 only contains one point, this point imperatively has to be the optimal point. The point refers to a consolidated server arrangement in which zero servers of type 3.1 and four servers of type 3.4 are used.

Typically, a solution space contains more than one discrete integer element. Then, the optimal solution can be determined by brute force assessing all points of the solution space. However, if the solution space is huge, other methods have to be applied to solve the problem in reasonable time.

Solving linear optimization problems with a discrete solution space is subject of Integer Linear Programming (ILP). A standard method of solving integer linear programs is the so-called "Cutting Planes Method". The method is explained for example in Schrijver Alexander, "Theory of linear and integer programming", Chapter 23: Cutting Planes, April 1998, Wiley Publisher.

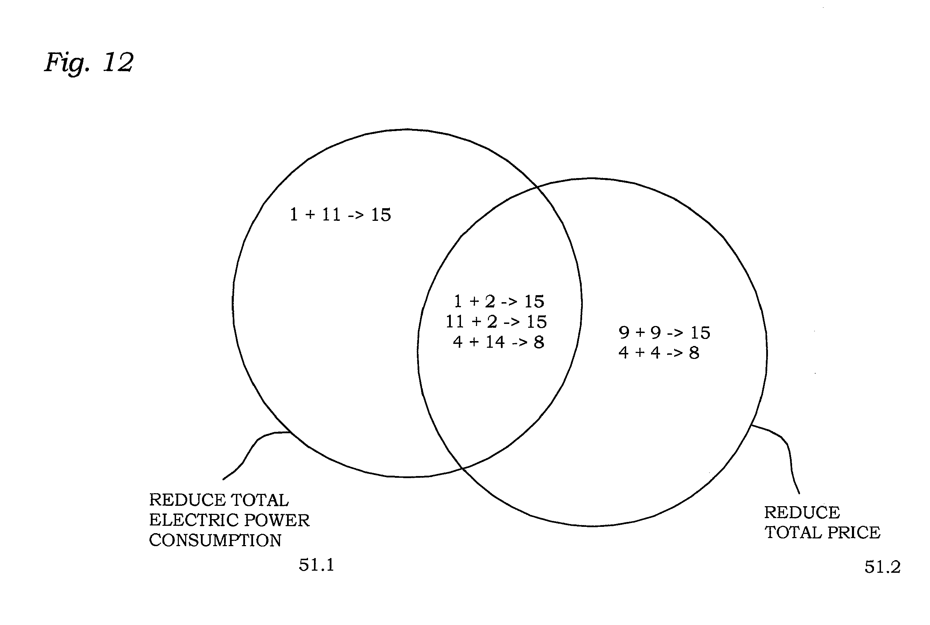

### Fig. 12: Consolidatoon rules:

Besides approaching the problem of consolidating an IT infrastructure from a linear optimization point of view, by either assessing all IT infrastructures within the solution space (brute-force approach) or applying more sophisticated methods such as the Simplex Algorithm (or Cutting-Planes method in the discrete case), another way of implementing the optimization engine 16 is based on consolidation rules 51. The linear optimization methods discussed above have the advantage that they yield the optimal solution if it exists, whereas applying consolidation rules 51 in the following way is considered to be a heuristic approach which provides comparatively good solutions, but not necessarily the best solution. In exchange, heuristics typically deliver their results more quickly than the exact algorithms. Heuristics typically apply rule-of-thumb or experience values. As discussed above, the server-related optimization-relevant data 14.1 stored in the server database system 17 constantly increases since whenever new server-related optimization-relevant data 14.1 is detected during server consolidations the server database system 17 incorporates the new server-related optimization-relevant data 14.1 into its storage.

Besides solely storing server-related data, it also makes sense to store consolidation rules 51. A consolidation rule 51 expresses how at least two servers 3 of the server arrangement 1 are advantageously substituted for another smaller set of servers 3 whereby the total electrical power consumption or any other optimization criterion is reduced.

Returning now to Fig. 9 which shows the server database system 17 at a certain stage. It has collected some optimization-relevant data 14.1 about different servers by updating its database each time it detects new server-related optimization-relevant data 14.1. The optimization-relevant data 14.1 about the servers 3.1 - 3.5 of the server arrangement 1 is stored in rows 1 to 3, 11 and 12. The optimization-relevant data about servers that are available for use in the consolidated server arrangement 19 are stored in rows 3, 5 to 10, 13 to 15. All consolidation rules 51 stored in the server database system 17 aim at reducing the total number of servers 3 in the server arrangement 1 while preserving the total CPU performance. The rules 51 further aim at either reducing the total electric power consumption of the server arrangement 1 (51.1), or at calculating a consolidated server arrangement 17 with lower total costs (51.2). Consolidation rules 51 considered in the given example are of the form A + B -> C, which means that exactly two servers (which need not be different server types) are replaced with exactly one server, whereby the application of the rule improves the server arrangement in terms of one or more of the two above-mentioned optimization aims. The set of consolidation rules 51 which are stored in the optimization engine 15 do not take into account a special server arrangement. They simply represent all rules 55 that are derived from the server database system 17 and which improve a server arrangement. Whenever the server database system 17 is updated, new consolidation rules 51 are calculated.

By applying, for example, the consolidation rule 1 + 11 -> 15 the number of servers is reduced by one, the total CPU performance is increased by 35, and, furthermore, the total electric power consumption of the server arrangement 1 is reduced by 800W. The rule, however, does not reduce the price of the server arrangement. Applying the consolidation rule 9 + 9 -> 15 or 4 + 4 -> 8 reduces the number of servers by one and further reduces the total price of the server arrangement. Applying the consolidation rules 1 + 2 -> 15, 11+12->15 or 4+14->8 reduces the number of servers by one, reduces the total electric power consumption and further leads to a consolidated server arrangement which is cheaper than the existing server arrangement 1. Looking at the different consolidation rules 51 that have been extracted from the server database system 17 , one has to keep in mind that not all rules are applicable when consolidating the server arrangement 1. The rules 4 + 14 -> 8, 9+ 9 -> 15, 4+4->8 cannot be applied, since the servers on the lefthand side of the rules 51 are not used in the server arrangement 1. Therefore, the only rules 51 applicable to the server arrangement 1 are 1+11->15, 1+2->15, and 11+12->15.

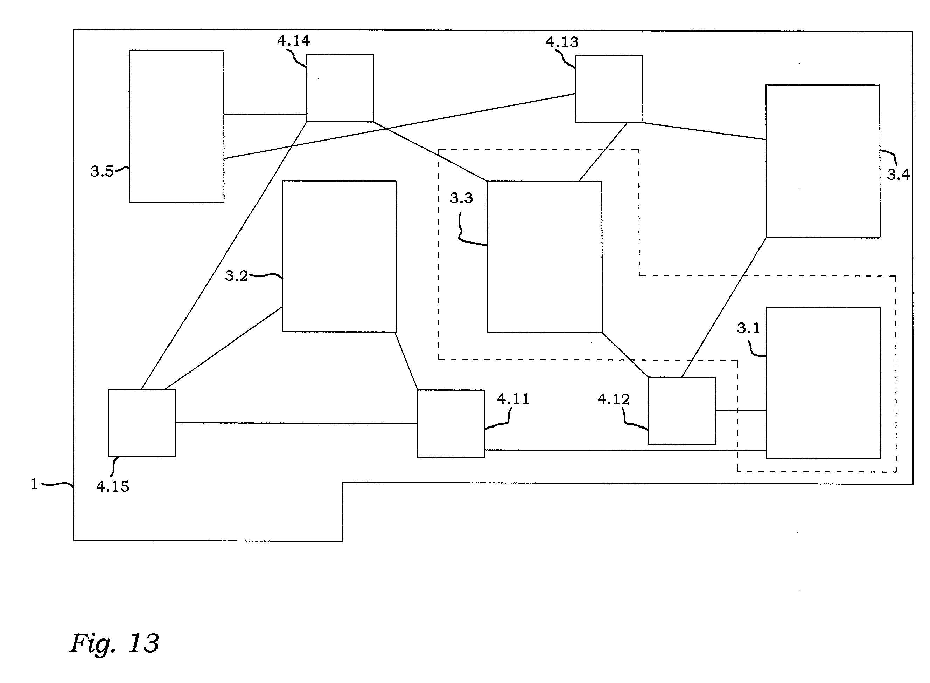

### Fig. 13: Unconsolidated server arrangement:

Fig. 13 shows the unconsolidated server arrangement 1 before the application of one of the consolidation rules shown in Fig. 12. The three consolidation rules 51 that are applicable to the unconsolidated server arrangement 1 are assessed in terms of the optimization problem that is to be solved. In terms of the server arrangement 1, the optimization engine 15 decides to apply rule 1+2->15. This means that server 3.1 and server 3.3 are replaced with the server 3.15 of the server database system 17. The two servers 3.1 and 3.3 that are going to be replaced with the new server 3.15 are framed in dashed lines.

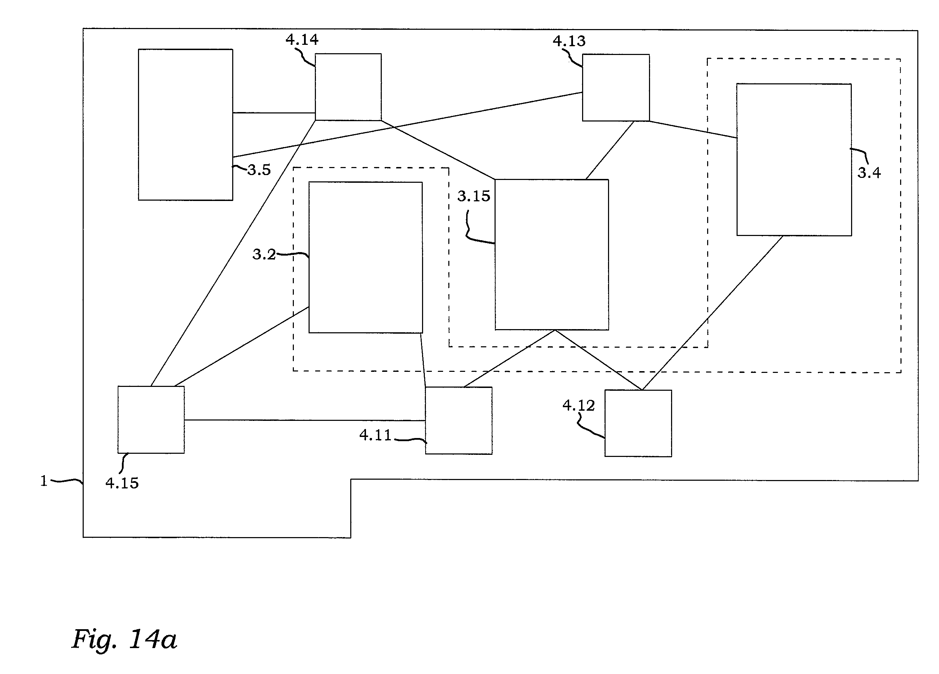

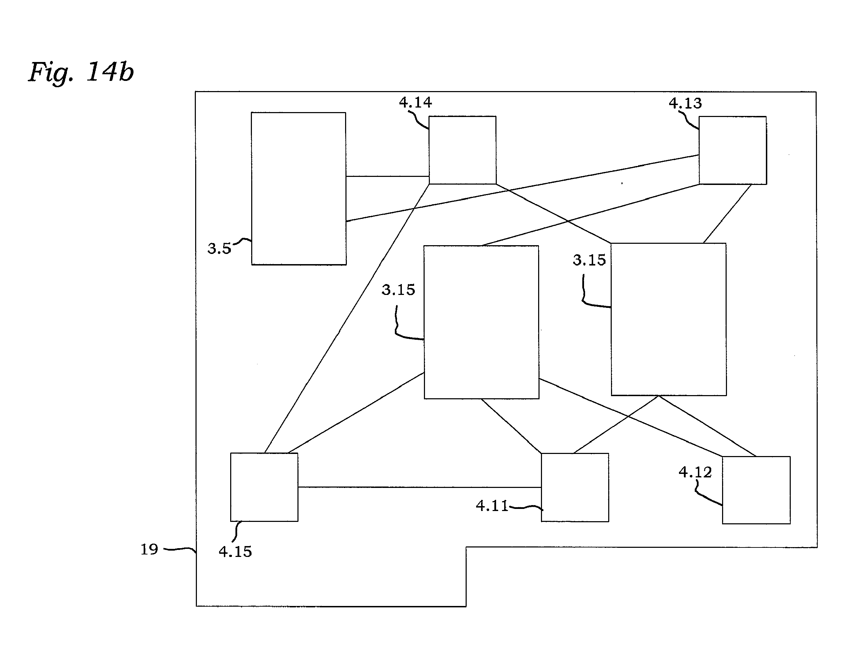

### Fig. 14: Consolidated server arrangement:

Fig. 14a illustrates the unconsolidated server arrangement 1 after one consolidation iteration as shown to the user via the graphical user interface 18. Servers 3.1 and 3.3 have been replaced with server 3.15 as calculated above. The total electric power consumption has been reduced by 900 Watt down to 2,900 Watt, the total price has been reduced by 1,100 $ down to 17,900 $. The new server 3.15 is connected to all interconnect devices 4 and servers 3 that the former servers 3.1 and 3.3 have been connected to. To this end, table 6.3 (topology table 14.4) of the relational data model 23 is needed which stores the topology of the unconsolidated server arrangement 1 and allows the new server 3.15 to be connected to all network components that the former servers 3.1 and 3.3 have been connected to. It should be mentioned that the server arrangement, after it has had the consolidation rule 1+2 -> 15 applied to it, can be further optimized by the application of a consolidation rule. Looking at the set of consolidation rules 51 that are in accordance with the optimization problem (Fig. 12) and the server arrangement after the first consolidation iteration as depicted in Fig. 14, one can see that another rule is applicable, namely the rule 11+12->15. The servers 3 that are going to be substituted are framed in dashed lines.

Fig. 14b shows the consolidated server arrangement 19 which cannot be further optimized with regard to the rules stored in the server database system 17. In general, the server arrangement which comes out at the end is not necessarily the optimal server arrangement, but is at least better than the initial server arrangement 1 in terms of the optimization aim.

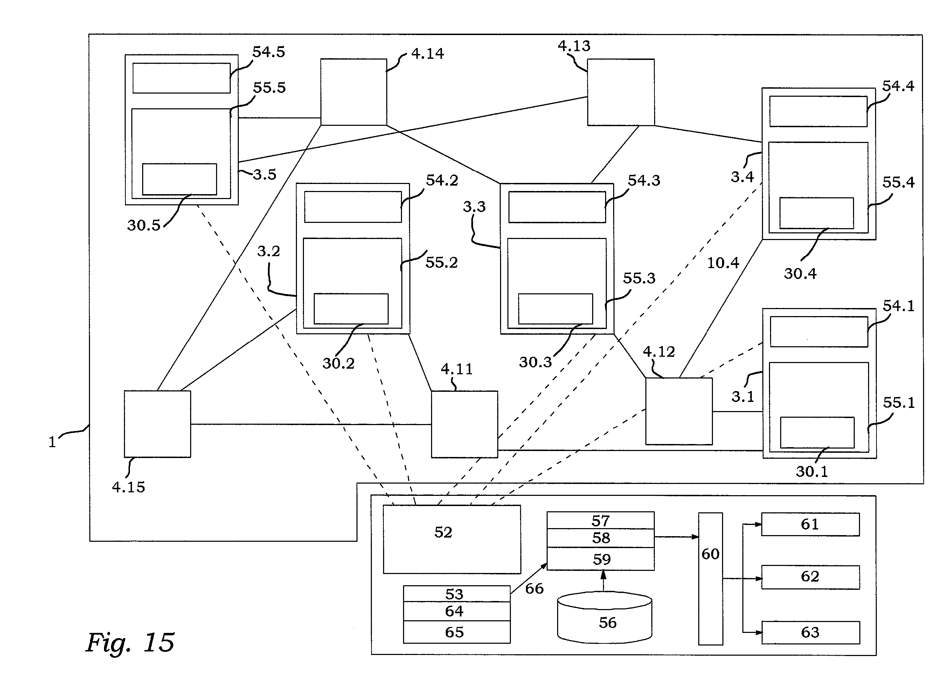

### Fig. 15: Integration of electric power consumption considerations into AOG CapacityPlanner:

In another embodiment, as shown in Fig. 15, the idea of considering the electric power consumption 30 of the servers 3 when consolidating server arrangements is integrated into the basic architecture of Asset Optimization Group's CapacityPlanner, which is an existing tool that helps businesses to understand what capacity they have, how it can be optimized, and how much more to purchase. The CapacityPlanner system provides an AOG collector 51 which is installed on one workstation, PC or server per 1,000 systems monitored. The 1,000-system limit is an estimate determined by the performance of the collector system 51 and the speed of the server arrangement 1. The collector system 51 must be authorized and able to connect to all the servers that it has to manage. The AOG manager 52 unobtrusively collects, in hours, detailed inventory data 54.1-54.5 and performance data 55.1-55.5, including the electric power consumption 30.1-30.5, of the individual servers 3 and generates an inventory report 64 and a performance report 65. The electric power consumption may either be the current electric power consumption 31.1-31.5 or the nominal electric power consumption 32.1-32.5. The CapacityPlanner combines the inventory report 64 with the corresponding performance report 65 to determine peak loads and make server recommendations. AOG goes beyond server consolidation by comparing the customer's data against industry benchmark data stored in an AOG data warehouse 56 (containing over one billion performance records) and anomaly reports for server benchmarking, rapid problem resolution, and ongoing performance improvement. To this end, the inventory report 64 and the performance report 65 is transferred via an HTTPS connection 66 to an AOG correlator 57 which is responsible for data aggregation 58 and data comparison 59, i.e. comparing the collected data with the data from the AOG data warehouse 56. Finally, via an AOG dashboard 60, the user is provided with an assessment 61, a server consolidation plan 62 and a performance tuning scheme 63

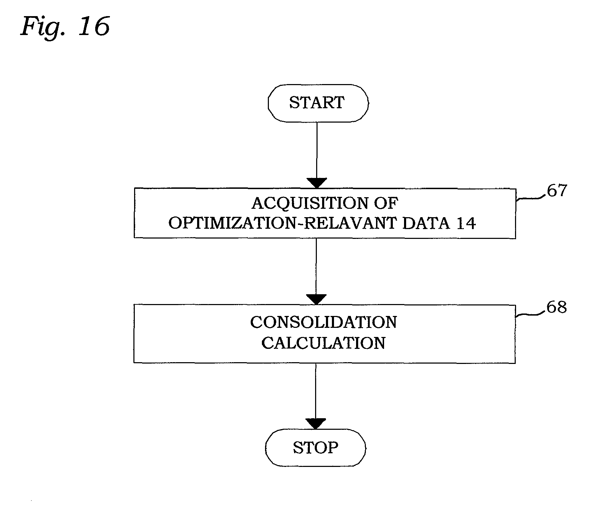

### Fig. 16: Consolidation process:

Fig. 16 subdivides the server consolidation process into a first phase, which is the acquisition of optimization-relevant data phase (box 67), and a second phase, which refers to the actual consolidation calculation (box 68).

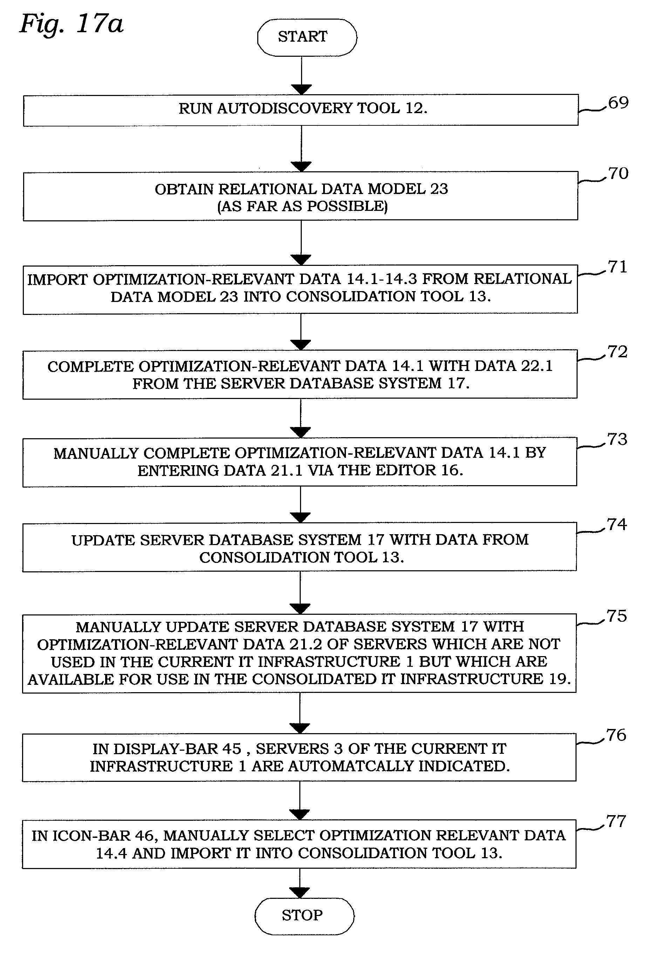

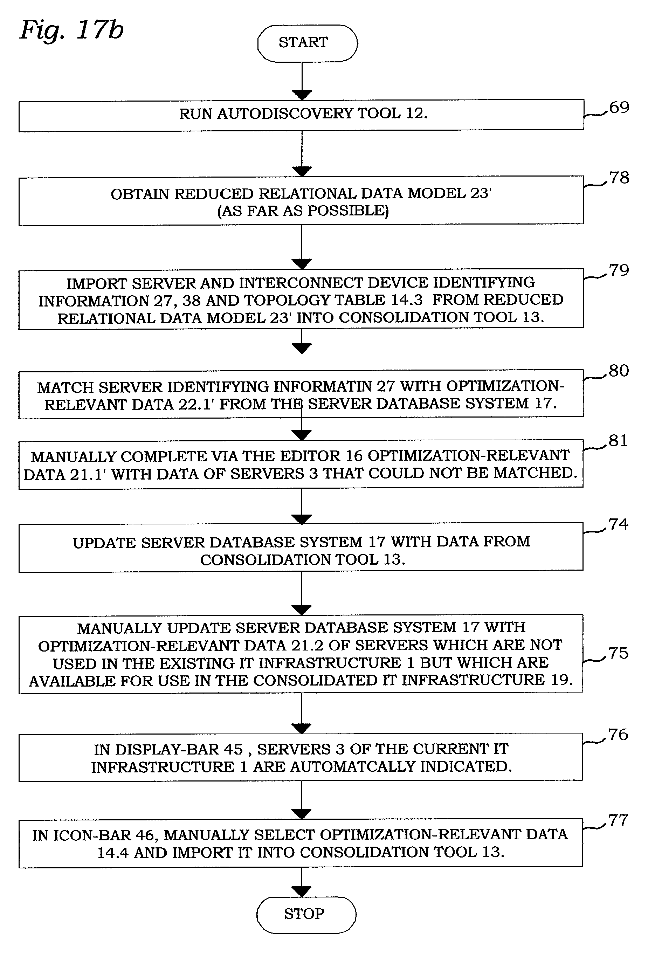

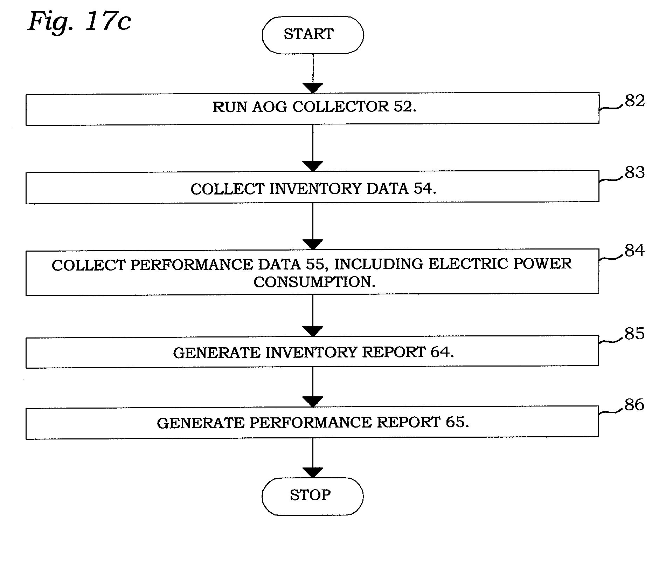

### Fig. 17: Data acquisition phase:

Fig. 17 illustrates the acquisition of optimization-relevant data 14 in more detail with the aid of three flowcharts Fig. 17a, Fig. 17b and Fig. 17c. One has to distinguish between the data acquisition of optimization-relevant data 14 in accordance with the architectures as presented in Fig. 1 and Fig. 4, the data acquisition in accordance with the architecture as presented in Fig. 5, and the data acquisition in accordance with the architecture of Fig. 15.

In the architectures according to Fig. 1 and Fig. 4, the electric power consumption value 30 of the servers 3 is stored in the MIBs 5, whereby in Fig. 1 the electric power consumption value 30 is the current electric power consumption 31 which is measured by an electric power meter 9 and is inserted into the MIBs 5 by the corresponding SNMP agent 6. In the architecture of Fig. 5, the electric power consumption is the nominal electric power consumption value 32 which is inserted into the MIBs 5 by the manufacturer.

In Fig. 17a, the data acquisition process is initiated by running an autodiscovery tool 12 on the unconsolidated server arrangement 1 at 69. At 70, a relational data model 23 is obtained which is solely made up of SNMP-queryable management information 20 of the server arrangement 1 and is therefore typically incomplete. The server-related optimization-relevant data 14. 1, the interconnect device-related optimization-relevant data 14.2 and the topology table 14.3 of the relational data model 23 is imported into the optimization-relevant data 14 of the consolidation tool 13 at 71, whereby the incomplete server-related optimization-relevant data 14.1 is completed with data 22.1 from the server database system 17 at 72. After that, if there is still data missing, the server-related optimization-relevant data 14.1 in the consolidation tool 13 is completed by means of the editor 16. At 74, the server database system 17 is updated with new data from the consolidation tool 13 (that has either been automatically discovered or manually entered) which has not yet been found in the server database system 17. At 75, the server database system 17 is manually updated via the editor 16 with optimization-relevant data 21.2 about servers which are not used in the server arrangement 1 but which are available for use in the consolidated server arrangement 19. The entries of the server database system 17 are shown via the graphical user interface 18 and the servers 3 of the server arrangement 1 are automatically indicated in the display-bar 45 at 76. The user manually selects from the servers which are available for use in the consolidated server arrangement 19 those which are actually taken into account when calculating the consolidated server arrangement 19 by ticking the corresponding icons of the icon-bar 46.

Fig. 17b illustrates data acquisition with reference to the architecture of Fig. 5. The main difference between the architecture of Fig. 5, on the one hand, and the architectures of Figs. 1 and 4, on the other relies on the fact that in the architecture of Fig. 5 the electric power consumption value 30 of servers is not deposited in the MIBs 5 of the servers 3. Therefore, server-identifying information 27 of the servers 3 of the server arrangement 1 is transmitted via SNMP to the network management application 11.

The data acquisition process is started by running an autodiscovery tool 12 on the unconsolidated server arrangement 1 at 69. A reduced relational data model 23' is obtained which solely contains server identifying information 27 of all servers 3, data pertaining to the interconnect devices and the topology table 14.3 of the server arrangement 1 at 74. Server-and interconnect-device-identifying information 27, 38 and the topology table 14.3 is imported into the consolidation tool 13. Then, the server-identifying information 27 is matched with optimization-relevant data 22.1' from the server database system 17. Thereby, the server-identifying information 27 of each server 3 is assigned optimization-relevant data about the corresponding servers 3 found in the server database system 17 at 80. Optimization-relevant data about servers 3 that could not be matched 21.1' is manually entered via the editor 16 into the server database system 17. At 74, the server database system 17 is updated with data from the consolidation tool 13. After that, optimization-relevant data 21.2 of servers which are not used in the server arrangement 1 but which are available for use in the consolidated server arrangement 19 is manually entered via the editor 16 into the consolidation tool 13 at 75. The data about the servers 3 of the server arrangement 1 is automatically indicated by means of the display-bar 45 via the graphical user interface 18 at 76. The user selects those servers which are effectively taken into account when consolidating the server arrangement 1 from the servers which are available for use in the consolidated server arrangement 17 by ticking the corresponding icons in the icon-bar 46. The data about the servers to be taken into account for consolidation which is not yet in the consolidation tool 13 is imported into it.

The optimization-relevant data 14.1-14.3 pertaining to the server arrangement 1 and the optimization-relevant data 14.4 pertaining to the servers that are to be taken into account for consolidation are now available to the optimization engine 15 which calculates the consolidated server arrangement 19 from the optimization-relevant data 14.

Fig. 17c illustrates the data acquisition phase 67 in accordance with the extended AOG CapacityPlanner as depicted in Fig. 15. It proceeds as follows: At 82, the AOG Collector 52 runs and, like the network management application 11 of the autodiscovery tool 12 in the architectures of Fig. 1, 4 and 5, collects inventory data 54.1-5 at 83 and performance data 55.1-5, whereby the performance data 55 also includes the electric power consumption 30 of the servers 3.1-3.5 at 84. Then, an inventory report 64 and a performance report 65 are generated on the basis of which the server consolidation plan 62 is calculated.

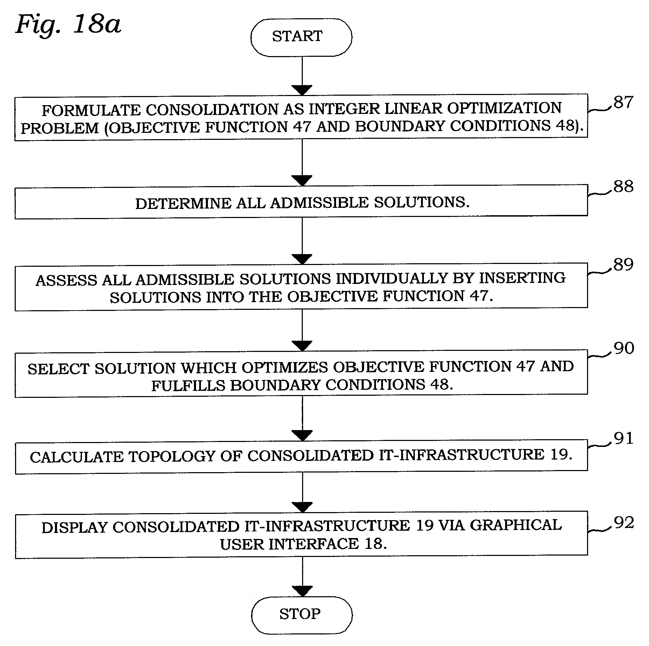

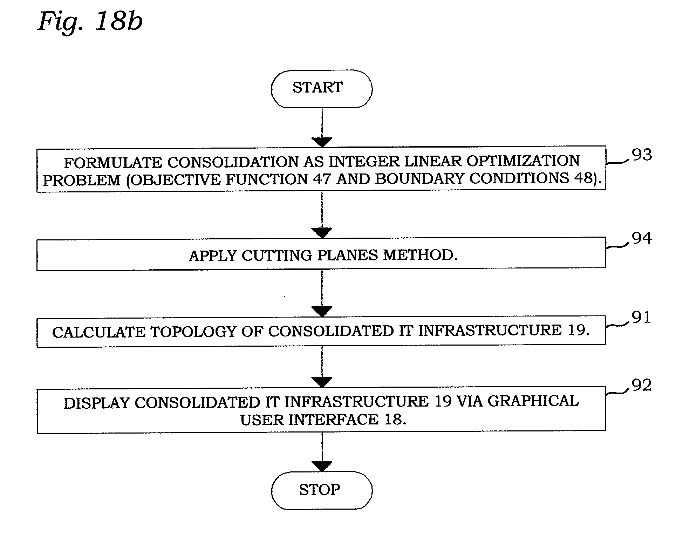

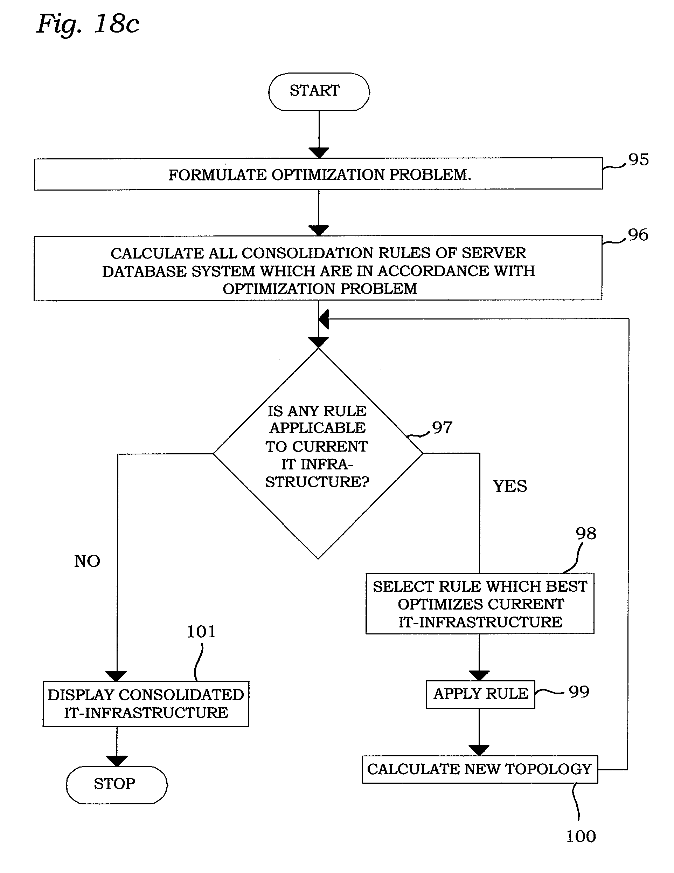

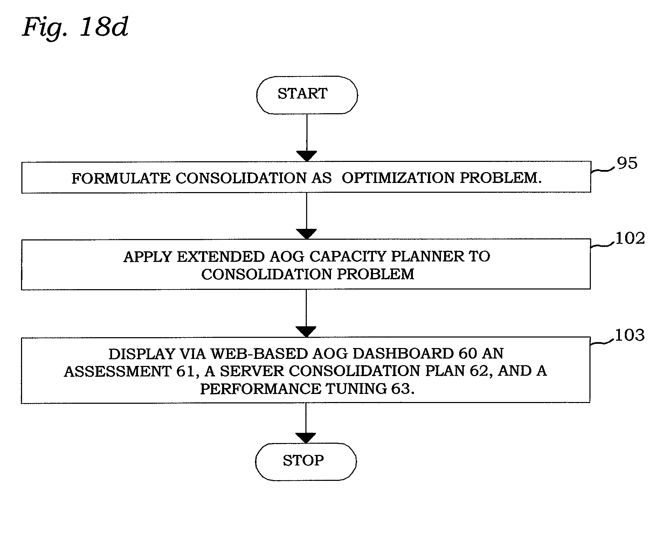

### Fig. 18: Consolidation calculation:

Fig. 18 summarizes four ways of implementing the optimization engine 15. It is pointed out that the methods of data acquisition can be arbitrarily combined with the methods of consolidation calculation as presented below:
Fig. 18a shows how to consolidate the server arrangement 1 by means of a brute-force linear-optimization algorithm. First, the server consolidation is formulated as an integer linear-optimization problem represented by its objective function 47 and boundary conditions 48 at 87. Then, all admissible solutions are calculated which are determined by linear equations (i.e. the boundary conditions 48) at 88. At 89, all admissible solutions are assessed by inserting each solution, i.e. each point, into the objective function 47. A solution which minimizes (or maximizes, as the case may be) the objective function 47 and fulfills all boundary conditions 48 is regarded as an optimal solution at 90. The topology of the consolidated server arrangement 19 is calculated by taking into account the former topology of the unconsolidated server arrangement 1 at 91. Finally, the consolidated server arrangement 19 is displayed via the graphical user interface 18 at 92.
Fig. 18b illustrates a more efficient way of approaching the problem. Initially, the consolidation is formulated as an integer linear-optimization problem at 93. Then, the Cutting-Planes method is applied to it at 94. The topology of the consolidated server arrangement 19 is calculated at 91 and displayed via the graphical user interface 18 at 92.
Fig. 18c summarizes the method of applying consolidation rules 51 to an unconsolidated server arrangement 1. First, the consolidation problem is formulated as an optimization problem at 95. At 96, all consolidation rules 51 - with the server database system 17 as a data basis - are calculated which are advantageous with regard to the optimization problem, i.e. which - when applied - transform an IT infrastructure into a more favorable state with regard to the optimization problem. At 97, it is ascertained whether there is any rule (among the rules which improve the IT infrastructure) which is applicable to the IT infrastructure in its current state. If there are several rules which are applicable, then the rule which is most advantageous is selected at 98. The rule is applied to the IT infrastructure at 99 and the topology of the new IT infrastructure is calculated at 100. Then, it is again ascertained whether a consolidation rule is applicable to the IT infrastructure in its new state. This procedure continues until no consolidation rule is applicable anymore to the current IT infrastructure. If no rule is applicable, then the IT infrastructure in its current state is displayed via the graphical user interface 18 in a video display as the consolidated server arrangement 19 at 101.
In Fig. 18d, the consolidation phase with regard to the extended AOG CapacityPlanner is illustrated. At first, an optimization problem involving the electric power consumption 30 of the servers is formulated at 95. Then, the extended AOG CapacityPlanner which is capable of taking into account the electric power consumption of servers is applied to the optimization problem at 103. Via the web-based AOG dashboard 60, an assessment 61, a server consolidation plan 62 and a performance tuning 63 is provided to the user.

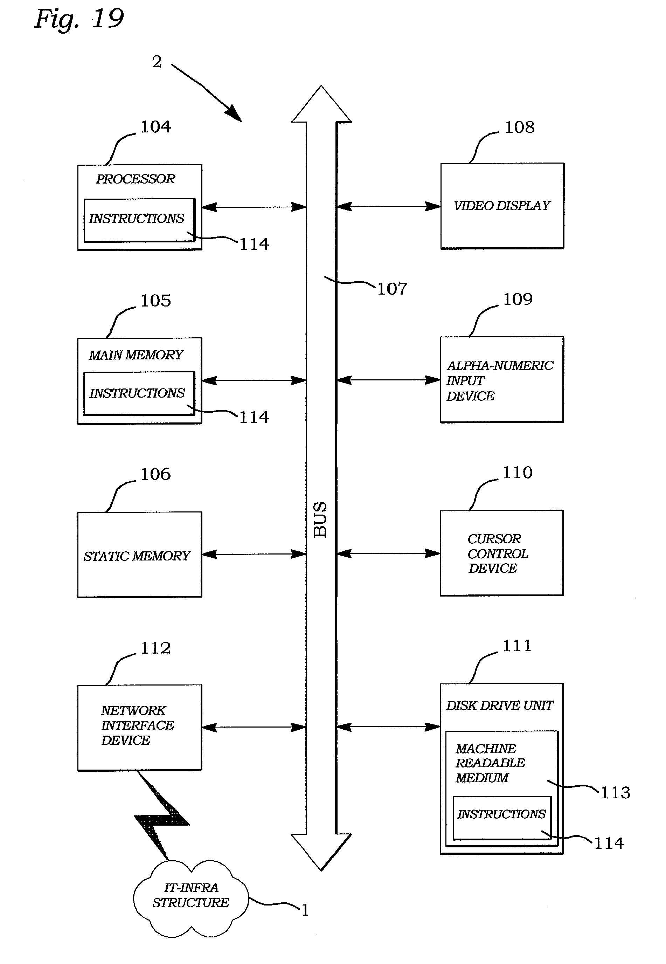

### Fig. 19: Computer system:

Fig. 19 is a diagrammatic representation of a computer system which provides the functionality of the network management station 2 of Fig. 1, and is therefore denoted as a management computer system. Within the management computer system 1 a set of instructions, to cause the computer system to perform any of the consolidation methodologies discussed herein, may be executed. The management computer system includes a processor 104, a main memory 105 and a network interface device 112, which communicate with each other via a bus 107. Optionally, it may further include a static memory 106 and a disk-drive unit 111. A video display 108, an alpha-numeric input device 109 and a cursor-control device 110 may form a management user interface. The network interface device 112 connects the management computer system 1 to the unconsolidated server arrangement 1. A set of instructions (i.e. software) 114 embodying any one, or all, of the methodologies described above, resides completely, or at least partially in or on a machine-readable medium, e.g. the main memory 105 and/or the processor 104. A machine-readable medium on which the software 59 resides may also be a data carrier 60 (e.g. a non-removable magnetic hard disk or an optical or magnetic removable disk) which is part of disk-drive unit 111. The software 59 may further be transmitted or received as a propagated signal via the Internet and the IT network through the network interface device 112.

Thus, the described embodiments of server consolidation systems enable an IT infrastructure to be consolidated while taking into account the electric power consumption of the servers.

All publications and existing systems mentioned in this specification are herein incorporated by references.

Although certain methods and products constructed in accordance with the teachings of the invention have been described therein, the scope of coverage of this patent is not limited thereto. On the contrary, this patent covers all embodiments of the teachings of the invention fairly falling within the scope of the appended claims either literally or under the doctrine of equivalents.

## Claims

1. A method of consolidating an existing arrangement of servers into a consolidated arrangement of servers, taking into account electric power consumption of the servers, the method comprising:
running an autodiscovery tool on the existing arrangement which discovers the servers of the existing arrangement and obtains optimization-relevant data about the discovered servers, including their electric power consumption,
determining the consolidated arrangement of servers by optimizing the existing arrangement of servers according to the one or more optimization criteria, taking into account the electric power consumption of the servers.

2. The method of claim 1, wherein the optimization-relevant data about each server comprises at least one of price, floor space, CPU performance, free memory space and electric power consumption of the servers.

3. The method of claim 1 or 2, wherein the electric power consumption of a server is a current value measured by a sensor inside the server.

4. The method of claim 3, wherein the sensor measuring the electric power consumption of each server is located inside the power-supply unit of each server.

5. The method of claim 4, wherein the optimization-relevant data about the servers of the existing arrangement which is not obtainable via the autodiscovery tool and the optimization-relevant data about the servers available for use in the consolidated arrangement but which are not used in the existing arrangement are gathered from a database system or data warehouse which stores optimization-relevant data about servers which were discovered in previous consolidations.

6. The method of claim 4, wherein an editor is provided by means of which the optimization-relevant data about the servers of the existing arrangement which is not obtainable via the autodiscovery tool and the optimization-relevant data about the servers available for use in the consolidated arrangement but which is not used in the first arrangement is entered manually.

7. The method of claim 4 wherein the electric power consumption of a server is measured on a regular basis by a sensor in the server, the values are stored, an average value is calculated from the measured values which is then stored in the management information base and which is obtainable by the autodiscovery tool.

8. The method of any one of claims 1 to 7, wherein the electric power consumption of a server is a nominal value which is stored in the server's management information base.

9. The method of claim 8, wherein the optimization-relevant data about the servers of the existing arrangement which is not obtainable via the autodiscovery tool and the optimization-relevant data about the servers available for use in the consolidated arrangement but which are not used in the existing arrangement is gathered from a database system storing optimization-relevant data about servers which were discovered in previous consolidations.

10. The method of claim 8, wherein an editor is provided by means of which the optimization-relevant data about the servers of the existing arrangement which is not obtainable via the autodiscovery tool and the optimization-relevant data about the servers available for use in the consolidated arrangement but which is not used in the existing arrangement is entered manually.

11. The method of claim 1, wherein server-identifying information stored in a management information base is obtainable via the autodiscovery tool.

12. The method of claim 11 wherein the optimization-relevant data about the servers of the existing arrangement is assigned to the discovered server identifiers from a database or data warehouse storing optimization-relevant data about servers which were discovered in previous consolidations and the optimization-relevant data about the servers available for use in the consolidated arrangement but which are not used in the existing arrangement is also stored in a database system.

13. The method of claim 11, wherein an editor is provided by means of which the optimization-relevant data is manually assigned to the discovered server-identifying information of the first arrangement and the optimization-relevant data about the servers available for use in the consolidated arrangement but which are not used in the first arrangement is entered manually.

14. The method of any one of claims 5 to 13, wherein the database system is updated with optimization-relevant data about the discovered servers in consolidations with new servers.

15. The method of any one of claims 1 to 14, wherein an aggregation function is provided to calculate the total electric power consumption of all discovered servers.

16. The method of any one of claims 1 to 15, wherein determining the consolidated arrangement is based on an integer linear-optimization technique.

17. The method of claim 16, wherein the integer linear-optimization technique is based on a calculation of all the possible server arrangements, assessing each arrangement with regard to the different optimization criteria and selecting the most appropriate arrangement.

18. The method of claim 16, wherein determining the consolidated arrangement is based on use of the Cutting-Planes method.

19. The method of any one of claims 1 to 18, wherein determining the consolidated arrangement is based on consolidation rules which have been calculated on the basis of the data stored in the database system.

20. The method of claim 19, wherein a consolidation rule indicates how a set of servers of the first server arrangement is to be replaced with another set of servers which is smaller and which optimizes according to optimization criterion.

21. A method of consolidating an existing arrangement of servers into a consolidated arrangement of servers, taking into account electric power consumption of the servers, measured by a sensor within the servers, the method comprising:
running an autodiscovery tool on the existing arrangement which discovers the servers of the existing arrangement and obtains optimization-relevant data about the discovered servers, including their measured electric power consumption,
determining the consolidated arrangement of servers by optimizing the existing arrangement of servers according to the one or more optimization criteria, taking into account the measured electric power consumption of the servers.

22. A computer system for consolidating an existing arrangement of servers into a consolidated arrangement of servers, taking into account electric power consumption of the servers, the computer system being programmed to:
run an autodiscovery tool on the existing arrangement which discovers the servers of the existing arrangement and obtains optimization-relevant data about the discovered servers, including their electric power consumption,
determine the consolidated arrangement of servers by optimizing the existing arrangement of servers according to the one or more optimization criteria, taking into account the electric power consumption of the servers.

23. A computer program product which is either in the form of a machine-readable medium with program code stored on it, or in the form of a propagated signal comprising a representation of program code, wherein the program code is arranged to carry out a method, when executed on a computer system, of consolidating an existing arrangement of servers into a consolidated arrangement of servers, taking into account electric power consumption of the servers, the method comprising:
running an autodiscovery tool on the existing arrangement which discovers the servers of the existing arrangement and obtains optimization-relevant data about the discovered servers, including their electric power consumption,
determining the consolidated arrangement of servers by optimizing the existing arrangement of servers according to the one or more optimization criteria, taking into account the electric power consumption of the servers.

## Amended claims

### Amended claims in accordance with Rule 86(2) EPC.

**1.** A computerized method of finding a consolidated arrangement of servers (19) by replacing servers (3) of an existing arrangement of servers (1) with another server (3) or other servers (3), wherein
the consolidated arrangement of servers (19) is determined by optimizing the existing arrangement of servers (1) according to one or more optimization criteria, taking into account electric power consumption (31, 32) of the servers (3),
**characterized by**
running an autodiscovery tool (12) on the existing arrangement (1) which discovers the servers of the existing arrangement (1),
collecting optimization-relevant data (14) about the discovered servers (3), including their electric power consumption (31, 32), wherein for at least some of the servers (3) the power consumption data (31, 32) is obtained from management information bases (5) of the servers (3) by queries of a network-management protocol, and
using electric power consumption values (31, 32) comprising power consumption values (31, 32) that have been queried from the management information bases (5) of servers (3) of the existing server arrangement (1) for determining the consolidated server arrangement (19).

**2.** The method of claim 1, wherein the optimization-relevant data (14) about each server (3) comprises price, floor space, CPU performance, free memory space and electric power consumption (31, 32) of the servers (3).

**3.** The method of claim 1, wherein the electric power consumption of a server (3) is a current value (31) measured by a sensor (9) inside the server (3).

**4.** The method of claim 3, wherein the sensor (9) measuring the electric power consumption of each server (3) is located inside the power-supply unit (8) of each server (3).

**5.** The method of claim 4, wherein the optimization-relevant data (14) about the servers (3) of the existing arrangement (1) which is not obtainable via the autodiscovery tool (12) and the optimization-relevant data (14) about the servers (3) available for use in the consolidated arrangement (19) but which are not used in the existing arrangement (1) are gathered from a database system (17) or data warehouse which stores optimization-relevant data (14) about servers (3) which were discovered in previous consolidations.

**6.** The method of claim 4, wherein an editor (13) is provided by means of which the optimization-relevant data (14) about the servers (3) of the existing arrangement (1) which is not obtainable via the autodiscovery tool (12) and the optimization-relevant data (14) about the servers (3) available for use in the consolidated arrangement (19) but which is not used in the existing arrangement (1) is entered manually.

**7.** The method of claim 4, wherein the electric power consumption (31) of a server (3) is measured on a regular basis by a sensor (9) in the server (3), the values are stored, an average value is calculated from the measured values (31) which is then stored in the management information base (5) and which is obtainable by the autodiscovery tool (12).

**8.** The method of claim 1, wherein the electric power consumption (32) of a server is a nominal value (32) which is stored in the server's management information base (5).

**9.** The method of claim 8, wherein the optimization-relevant data (14) about the servers (3) of the existing arrangement (1) which is not obtainable via the autodiscovery tool (12) and the optimization-relevant data (14) about the servers available for use in the consolidated arrangement (19) but which are not used in the existing arrangement (1) is gathered from a database system storing optimization-relevant data (14) about servers (3) which were discovered in previous consolidations.

**10.** The method of claim 8, wherein an editor (16) is provided by means of which the optimization-relevant data (14) about the servers (3) of the existing arrangement (1) which is not obtainable via the autodiscovery tool (12) and the optimization-relevant data (14) about the servers (3) available for use in the consolidated arrangement (19) but which is not used in the existing arrangement (1) is entered manually.

**11.** The method of claim 5, wherein the database system (17) is updated with optimization-relevant data (14) about the discovered servers (3) in consolidations with new servers (3).

**12.** The method of claim 1, wherein an aggregation function is provided to calculate the total electric power consumption of all discovered servers (3).

**13.** The method of claim 1, wherein determining the consolidated arrangement (19) is based on an integer linear-optimization technique.

**14.** The method of claim 13, wherein the integer linear-optimization technique is based on a calculation of all the possible server arrangements, assessing each arrangement with regard to the different optimization criteria and selecting the most appropriate arrangement.

**15.** The method of claim 13, wherein determining the consolidated arrangement (19) is based on use of the Cutting-Planes method.

**16.** The method of claim 1, wherein determining the consolidated arrangement (19) is based on consolidation rules (51) which have been calculated on the basis of the data stored in the database system (16).

**17.** The method of claim 16, wherein a consolidation rule indicates how a set of servers of the existing server arrangement (1) is to be replaced with another set of servers (3) which is smaller and which optimizes according to an optimization criterion.

**18.** A computer system (2) for finding a consolidated arrangement of servers (19) by replacing servers (3) of an existing arrangement of servers (1) with another server (3) or other servers (3), the computer system (2) being programmed to:
determine the consolidated arrangement of servers (19) by optimizing the existing arrangement of servers (1) according to one or more optimization criteria, taking into account electric power consumption (31, 32) of the servers (3),
**characterized by**
running an autodiscovery tool (12) on the existing arrangement (1) which discovers the servers (3) of the existing arrangement (1),
collecting optimization-relevant data (14) about the discovered servers (3), including their electric power consumption (31, 32), wherein for at least some of the servers (3) the power consumption data (31, 32) is obtained from management information bases (5) of the servers (3) by queries of a network-management protocol, and
using electric power consumption values (31, 32) comprising power consumption values (31, 32) that have been queried from the management information bases (5) of servers (3) of the existing server arrangement (1) for determining the consolidated server arrangement (19).

**19.** A computer program product which is either in the form of a machine-readable medium with program code stored on it, or in the form of a propagated signal comprising a representation of program code, wherein the program code is arranged to carry out a method according to any one of the claims 1 to 17, when executed on a computer system.
